# EUROPÄISCHE PATENTSCHRIFT

(11) **EP 1 924 212 B1**
(45) Veröffentlichungstag und Bekanntmachung des Hinweises auf die Patenterteilung: **29.02.2012**
(21) Anmeldenummer: 06793529.6
(22) Anmeldetag: 14.09.2006
(51) Int. Cl.: A61C 8/00

(54) **ZWEITEILIGES ZAHNIMPLANTAT**
TWO-PART DENTAL IMPLANT
IMPLANT DENTAIRE EN DEUX PARTIES

(30) Priorität: 16.09.2005 DE 202005015074 U; 09.05.2006 DE 202006007639 U; 30.06.2006 DE 202006010431 U; 25.08.2006 DE 102006040457
(43) Veröffentlichungstag der Anmeldung: 28.05.2008
(60) Teilanmeldung: 11194101.9
(73) Patentinhaber: Mehrhof Implant Technologies GmbH, 10553 Berlin (DE)
(72) Erfinder: Mehrhof, Jürgen, 14129 Berlin (DE)
(74) Vertreter: Bauer, Clemens
(86) Internationale Anmeldenummer: PCT/EP2006/066378
(87) Internationale Veröffentlichungsnummer: WO 2007/031562

(56) Entgegenhaltungen:
- EP-A2- 0 323 823
- WO-A-99/52464

## Beschreibung

Die Erfindung betrifft ein zweiteiliges Zahnimplantat. Ein distaler Implantatsteil ist als künstliche Zahnwurzel für die Implantation in einem Kieferknochen ausgebildet und ein proximaler Implantatsteil trägt eine künstliche Zahnkrone.

Die Erfindung betrifft insbesondere die Verbindung zwischen distalem und proximalem Implantatsteil, im Folgenden auch mit Implantat-Abutment-Verbindung bezeichnet und mit IAV abgekürzt. Das proximale Ende des distalen Implantatsteils und das distale Ende des proximalen Implantatsteils sind geometrisch zueinander passend gestaltet und grenzen im implantierten Zustand des Schaftes aneinander an.

Zahnimplantate dienen dem Ersatz verlorengegangener Zähne. Bei Zahnimplantaten unterscheidet man ein- und zweiteilige Systeme. Die vorliegende Erfindung betrifft ein zweiteiliges System. Derartige zweiteilige Systeme besitzen einen distalen und einen proximalen Implantatsteil. Der distale Implantatsteil wird in den Kieferknochen eingebracht und verwächst dort mit dem Knochen. Der proximale Implantatsteil - auch Abutment genannt - ragt einige Millimeter in den Mundraum und dient als künstlicher Zahnstumpf. Im vorliegenden Fall bildet der distale Implantatsteil eine künstliche Zahnwurzel, während der proximale Implantatsteil den zuvor erwähnten, künstlichen Zahnstumpf bildet. Der proximale Implantatsteil nimmt Zahnersatz verschiedenster Formen, zum Beispiel in Form einer Krone auf und verbindet diese über den distalen Implantatsteil mit dem Kiefer.

Der distale Implantatsteil und der proximale Implantatsteil werden üblicherweise in Längsrichtung durch einen in Längsrichtung verlaufenden Schraubbolzen miteinander verbunden. Die Geometrie des Verbindungsbereiches zwischen distalen Implantatsteil und proximalen Implantatsteil ist derart, dass die Verbindung zwischen beiden Implantatsteilen form- oder kraftschlüssig oder beides ist.

Die wichtigsten Anforderungen an die Verbindung zwischen distalen Implantatsteil und proximalen Implantatsteil sind: Die Verbindung muss stabil sein, da sie enormen Kaukräften ausgesetzt ist. Die Passteile müssen sehr exakt gearbeitet sein und dürfen im zusammengefügten Zustand keine Spalte aufweisen. Der Aufbau soll jederzeit vom Implantat gelöst und wieder damit verbunden werden können. Der Aufbau soll durch andere Aufbauten ersetzt werden können. Die beiden Implantatsteile müssen im verbundenen Zustand starr und spielfrei sowie gegen Verdrehen um die Implantatslängsachse gesichert sein. Dies ist von besonderer Bedeutung, wenn in einem Kiefer mehrere Implantate eingesetzt wurden und diese einzelnen Implantate eine komplexe zusammenhängende Konstruktion, wie etwa eine verschraubte festsitzende Implantatbrücke aufnehmen sollen. Nur mit einer exakten Verdrehsicherung kann eine solche Implantatkonstruktion passend genau hergestellt werden. Wenn mehrere Implantataufbäuten direkt miteinander verbunden werden, zum Beispiel im Falle einer Stegunterkonstruktion, welche in der Regel eine herausnehmbare Prothese trägt, kann auf eine Rotationssicherung verzichtet werden. An die für diese Anwendung vorgesehenen Stegaufbauten wird zu den bereits aufgeführten Anforderungen eine weitere Anforderung gestellt: Stegaufbauten müssen die Möglichkeit zulassen, dass mehrere miteinander verbundene Aufbauten auch dann problemlos auf die Implantate aufgesetzt und mit diesen verbunden werden können, wenn die Implantatfixaturen, wie üblich, nicht parallel zueinander In den Knochen eingebracht wurden.

Bekannte zweiteilige Zahnimplantate erfüllen die vorgenannten Anforderungen nicht in dem gewünschten Maße. Ein besonderes Problem bei vielen bekannten zweiteiligen Implantaten ist der Übergang zwischen den beiden Implantatsteilen. Bekannte Lösungsvorschläge, z.B. aus EP 0 842 643, US 5.919,043, EP 1 371 342 oder US 6 162 737, sind nicht befriedigend.

Die EP 0 323 823 A2 betrifft ein Implantat zur Befestigung von Zahnprothesen, bestehend aus einem Primär- und einem Sekundärteil, wobei der Primärteil zur Verankerung im Kieferknochen vorgesehen ist und der Sekundärteil in einer Ausnehmung des Primärteils durch einen Einlegestift verdrehgesichert und in radialer Richtung mit Spiel einsetzbar ist, wobei mindestens ein O-Ring den radialen Abstand zwischen Primärteil und Sekundärteil kraft- und wegdefiniert elastisch überbrückt.

Die WO 99/52464 A1 betrifft ein Einzelzahnimplantat mit einem Grundkörper und einem Aufsatz, bei dem der Grundkörper einen Formschlussbereich mit Formschlusselementen zum Verbinden mit dem Aufsatz und einen Zentrierbereich und der Aufsatz komplementär hierzu einem Formschlussabschnitt und einen Zentrierabschnitt aufweisen, wobei die Formschlusselemente des Formschlussbereichs von der Stirnwand des Grundkörpers abgesetzt angeordnet sind.

Es ist Aufgabe der Erfindung, ein zweiteiliges Zahnimplantat vorzusehen, welches eine stabile Verbindung der beiden Implantatteile gewährleistet und eine Spaltbildung zwischen den beiden Implantatteilen vermeidet

Diese Aufgabe wird durch ein zweiteiliges Zahnimplantat mit den im Anspruch 1 angegebenen Merkmalen gelöst. Bevorzugte Ausführungsformen ergeben sich aus den abhängigen Ansprüchen.

In einer bevorzugten Variante des Dichtkörpers weist dieser Dichtflächen aus elastischem Material auf, so dass sich die Dichtflächen dichtend an dafür vorgesehene Oberflächen von distalen und proximalem Implantatsteil anlegen, wenn der distale und der proximale Implantatsteil miteinander verbunden werden. Dichtung sowie proximaler und distaler Implantatsteil sind so gestaltet, dass nach Herstellen der endgültigen Verbindung zwischen distalem und proximalem implantatsteil eine Flächenpressung zwischen den Dichtflächen des Dichtkörpers und den entsprechenden Oberflächen der beiden Implantatsteile herrscht, die auch dann erhalten bleibt, wenn das Implantat Kaukräften ausgesetzt ist und sich infolge dieser Kaukräfte auch im Bereich des Übergangs von proximalem zu distalem Implantatsteil elastisch verformt.

Somit ist erfindungsgemäß zwischen zwei bei fertig montiertem, zweigeteiltem Schaft In Längsrichtung des Schaftes einander gegenüberliegenden und in Bezug auf die radiale Richtung des Schaftes außen liegenden Stirnflächen ein Dichtkörper als Dichtung vorgesehen, der so bemessen ist, dass er bei axialer Belastung des Zahnimplantats nicht in axialer Richtung des Schaftes komprimiert wird und bei seitlicher Belastung immer um ein Mindestmaß komprimiert bleibt. Die Dichtung wird somit beim Zusammenfügen des Implantats lediglich um das notwendige Maß so komprimiert, dass die Implantat-Abutment-Verbindung unter allen möglichen Umständen eine Dichtigkeit gewährleistet. Das Maß der Kompression ist abhängig vom Material und von der Dicke des Materials, bei Einsatz einer größeren Bauhöhe der Dichtung könnte die Kompressionsmöglichkeit des Materials geringer ausfallen um die Bewegungen im Dichtungsbereich zu kompensieren.

Zur Montage des Dichtkörpers ist vorzugsweise ein Dichtkörperträger vorgesehen, der als Positionierungshilfe für den Dichtkörpers dient und bereits vom Hersteller des Dichtkörpers bestückt werden kann, so dass der das Implantat schließlich fertig montierende Zahnarzt den Dichtkörper mit Hilfe des Dichtkörperträgers leicht montieren kann.

Der im Folgenden näher erläuterte Versuch zeigt, dass Dichtungen mit einem Dichtkörper aus starrem Material die gewünschte Dichtigkeit nicht gewährleisten können:
Ein untersuchtes Implantat wurde bis zur Höhe der Implantatschulter (proximales Ende des distalen Implantatsteils) starr In eine Haltevorrichtung eingespannt.
Auf den distalen Implantatsteil wurde der proximale Implantatsteil mittels eines Schraubbolzens mit einer definierten Montagekraft aufgeschraubt.

Es wurde eine Kraft von 100N im 30° Winkel zur Längsachse des Implantats auf die proximale Stirnfläche des proximalen Implantatsteils eingebracht und dadurch eine elastische (reversible) Materialdeformation der zusammengefügten Implantatkomponenten provoziert.

Dies ergab folgende Messergebnisse:

Im Bereich der beiden einander zugewandten Oberflächen der beiden Implantatsteile ergaben sich folgenden Veränderungen während der Krafteinwirkung:

Auf der krafteinwirkenden Seite erhöht sich das Maß des für die Dichtung vorgesehenen Nennmaßes (definierter Spalt) um einen Wert ≥ 1 µm.

Auf der gegenüberliegenden Seite der Krafteinwirkung verringert sich das Maß des für die Dichtung vorgesehenen Nennmaßes (definierter Spalt) zur gleichen Zeit um einen Wert von ≥50 µm.

Der Versuch wurde mit den Materialien einer Titanlegierung (Ti6Al4V) und einer Keramik (ZrO₂) durchgeführt.

Diese Messungen unterstützen die der Erfindung zugrunde liegende Erkenntnis, dass eine starre oder plastisch verformbare Dichtung keinen Schutz gegen ein Eindringen von Bakterien in diesen Bereich darstellt.

Dichtungen, die auf dem Prinzip der bleibenden Verformung eines Dichtkörpers basieren, funktionieren nur bei Verbindungen auf deren Komponenten keine Kräfte einwirken.

Zahnimplantate dienen zum Ersatz verloren gegangener Kauorgane und müssen somit Kräfte, sog. Kaukräfte aufnehmen und sind diesen permanent ausgesetzt. Schon bei geringen extra-axialen Kräften und axialen Kräften, welche die Montagekraft der Schraubverbindung übersteigen, entstehen bei Verwendung eines starren oder duktilen Dichtkörpers Spalten, die nicht wieder geschlossen werden. Somit können diese Verbindungen nicht als bakteriendicht bezeichnet werden. Die für die Flächenpressung zwischen Dichtkörper und jeweiligem Implantatsteil erforderlichen Kräfte können auf zweierlei Weise erzeugt werden. Zum einen kann der Dichtkörper während des Verbindens von proximalem und distalem Implantatsteil zwischen den beiden Implantatsteilen elastisch komprimiert werden, wenn die Art der Verbindung - beispielsweise eine axiale Schraubverbindung - und die Art und Anordnung der Dichtung entsprechend gewählt sind. Hier ist eine Anordnung vorteilhaft, bei der der Dichtkörper die Form einer Kreisscheibe mit zentraler Durchgangsöffnung hat und zwischen zwei sich radial erstreckenden Oberflächen des distalen und des proximalen Implantatsteils angeordnet ist.

Zum anderen kann die Dichtung auch einen Dichtkörper aufweisen, der nach Herstellen der Verbindung zwischen distalem und proximalem Implantatsteil expandiert. Eine derartige Anordnung lässt sich am besten verwirklichen, wenn sich die Oberflächen der beiden Implantatsteile in radialer Richtung gegenüber liegen, so dass ein von der Dichtung auszufüllender Zwischenraum zwischen proximalem und distalem Implantatsteil von einem Dichtkörper auszufüllen ist, der die Form eines kurzen, sich gegebenenfalls zum distalen Ende hin verjüngenden Rohres hat. Vorteilhaft ist es, wenn der Dichtkörper die bereits beschriebenen elastischen Eigenschaften aufweist oder in seinem, beispielsweise durch Kühlung kontrahierten Zustand in den proximalen oder distalen Implantatsteil eingesetzt wird, anschließend der jeweils andere Implantatsteil mit dem ersten Implantatsteil verbunden wird und der Dichtkörper sich anschließend - beispielsweise in Folge von Erwärmung - ausdehnt. Das gleiche Prinzip ist auch auf eine Dichtung anwendbar, bei der der Dichtkörper die Form einer Kreisscheibe mit zentraler Durchtrittsordnung hat.

Geeignete Materialien für den Dichtkörper sind biokompatible Kunststoffe, insbesondere Elastomere oder Duromere. Hierzu soll auch eine besonders geeignete Mischung aus Kautschuk und PTFE zählen. Diese Mischung enthält vorzugsweie Ruß als Füllstoff. Auch thermoplastische Elastomere und Elastomerlegierungen (z.B. Polypropylen aus der Gruppe der Polyolefine), Thermoplaste (z.B. Perfluorelastomere (PTFE, FKM, FFKM, FFPM) und Polyetheretherketon(PEEK)) und Duroplaste (Amino- oder Phenolplaste) oder ein Silikon kommen als elastischer Kunststoff für den Dichtkörper in Frage.

Von diesen Elastomeren ist FFKM, das als Basiswerkstoff PTFE enthält als Füllstoff Kieselsäure besonders geeignet. Eine Schwarzfärbung eines solchen Elastomers ist mit Ruß zu erzielen und eine Weißfärbung mit Titandioxid oder Bariumsulfat. Bereits Kieselsäure alleine kann für eine ausreichende Weißfärbung sorgen.

Besonders geeignet ist auch ein Dichtkörper, der zu großen Teilen von einem Elastomer gebildet ist, der auf seiner Außenseite mit einem Thermoplast oder einem Duromer, und zwar vorzugsweise mit PTFE, beschichtet ist. Hierbei hält das Elastomer die Spannung dauerhaft aufrecht und das PTFE ist mundbeständig und dichtet dauerhaft ab.

Ein anderes geeignetes Beschichtungsmaterial ist ein Dimer wie Diapraxylylen, das auch als Parylene bekannt ist und in einem Plasmabeschichtungsverfahren auf zu beschichtende Oberflächen aufgebracht werden kann. Geeignete Schichtdicken liegen zwischen 0,5µm und 50µm. Besonders geeignet sind Schichtdicken zischen 1µm und 5µm, z.B. 3µm. Im Folgenden sind beispielhaft Strukturformeln eines solchen Beschichtungsmaterials dargestellt:

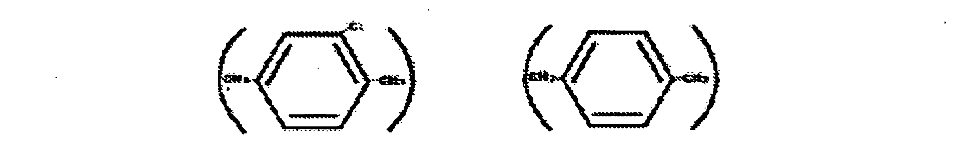

Die Oberfläche der Parylenebeschichtung kann zusätzlich mit einer Nanobeschichtung von Metall wie Titan oder Silber - auch in Kombination mit einer Keramik - versehen werden. Die Beschichtung sorgt sowohl für eine Bakteriendichtigkeit und zugleich für ein neutrales Verhalten gegenüber dem Zellgewebe.

Die jeweils zu beschichtende Oberfläche ist vorzugsweise polarisiert, um deren Haftfähigkeit für die Beschichtung zu erhöhen. Eine derartige Polarisierung der Oberfläche kann auf grundsätzlich bekannte Weise mit Hilfe eines Plasmaverfahrens geschehen.

Weiterhin kann es vorteilhaft sein, Oberflächen des Implantas oder seiner Bestandteile, insbesondere die nach außen gewandte Oberfläche des Dichtkörpers zu polarisieren, um eine bessere Körperverträglichkeit zu erzielen. Durch eine Polarisierung wird erreicht, dass sich die angrenzenden Gewebe, wie z.B. Knochen und Zahnfleisch, nicht ablehnend gegenüber der Beschichtung verhalten bzw. verhalten können.

In Bezug auf einen ggf. teilweise beschichteten Dichtkörper ist es sinnvoll, wenn die beschichteten Flächen keine scharfen Kanten aufweisen. Vielmehr sollten alle beschichteten Kanten verrundet sein, um ein Abplatzen der Beschichtung beim Verformen des Dichtkörpers zu vermeiden.

Vorteilhaft ist es, wenn das elastische Material des Dichtkörpers um mindestens 5%, besser um mehr als 20%, elastisch dehnbar oder komprimierbar ist. In einem Ausführungsbeispiel ist beispielweise der durch die Anschlagsflächen vorgegeben Abstand zwischen den einander zugewandten Oberflächen der beiden Implantatsteile 250µm, so dass die Dichtung ein Nennmaß von 250µm hat. In diesem Fall sollte der Dichtkörper zum Beispiel 50µm über dem Nennmaß (250µm) der Dichtung gefertigt sein, so dass nach dem Zusammenbau bereits eine Kompression von 50µm (20% Kompression) entsteht. Diese Größen stellen ein angestrebtes Idealmaß dar. Die Bauhöhe der Dichtung sollte so gering wie möglich sein, um aus ästhetischen Gründen keine Bauhöhe für die spätere Zahnkrone zu verschenken; als Nennmaß kommen insbesondere Maße zwischen 0,1mm und 3 mm in Frage. Für die Bemessung ist entscheidend, dass die Dichtung auch unter Einwirkung von Kaukräfte lediglich im Bereich Ihrer elastischen Verformbarkeit verformt wird und auch in Teilbereichen z.B. bei seitlicher Belastung immer um ein Mindestmaß komprimiert bleibt. Der Dichtkörper wird somit beim Zusammenfügen des Implantats lediglich um das notwendige Maß komprimiert, so dass die Implantat-Abutment-Verbindung unter allen möglichen Umständen eine Dichtigkeit gewährleistet. Das Maß der Kompression ist abhängig vom Material und von der Dicke des Materials, bei Einsatz einer größeren Bauhöhe der Dichtung könnte die Kompressionsmöglichkeit des Materials geringer ausfallen um die Bewegungen im Dichtungsbereich zu kompensieren.

Für einen bei Wärme expandierenden Dichtkörper sind insbesondere Kunststoffe mit einem hohen Wärmeausdehnungskoeffizienten von mehr als 75 x 10⁻⁶/K bei 20°C vorteilhaft.

Vorzugsweise ist wenigstens eine eine Außenfläche des Implantats bildende Außenfläche des Dichtkörpers mit einer Metall- oder Keramikschicht in zuvor beschriebener Weise beschichtet, wobei die Metall- Parylene oder Keramikschicht ein Eindringen von Bakterien in von der Metall- oder Keramikschicht bedeckte Dichtungsbestandteile verhindert. Besonders geeignet ist eine Nanobeschichtung, beispielsweise mit Titanpartikeln. Die Dichtfläche selbst kann unmittelbar aus einem biokompatiblen Kunststoff bestehen oder auf vorgenannte Art beschichtet sein. Als Material für die Metallschicht kommen vor allem Titan, Silber oder Gold, ggf. auch in Form eines Bestandteils einer Legierung in Frage. Alle Oberflächenmaterialien der Dichtungen sind mundbeständig und sterilisierbar und nehmen kein oder nur in sehr geringem Maße Wasser auf.

Der Dichtkörper kann neben elastischem Kunststoff auch eine Metallfeder oder ein separates Kuststofffederelement aus einem anderen Kunststoff, wie beispielsweise PEEK, enthalten. Das Federelement kann beispielsweise die Form einer Tellerfeder oder eines Ringes mit u-förmigem, nach innen offenen Querschnitt haben und stellt die dauerhafte Elastizität und Spannkraft des Dichtkörpers sicher. Eine Metallfeder kann insbesondere bei-einem Dichtkörper vorteilhaft sein, bei dem der elastische Kunststoff wenigstens teilweise aus Polytetrafluorethylen (PTFE, Teflon), Polypropylen (PP) oder auch Polyethteretherketon (PEEK) besteht.

Die Erfindung beruht auf der Erkenntnis, dass ein zweiteiliges Zahnimplantat keinen Mikrospalt im Bereich des Knochenaustrittspunkt hat, da sich genau an dieser Stelle die Implantat-Abutment-Verbindung (IAV) befindet, also die Verbindung zwischen proximalem und distalem Implantatsteil. Diese Verbindung verursacht einen Mikrospalt, dieser Mikrospalt wiederum ist Gegenstand der derzeitigen wissenschaftlichen Diskussion. Es ist bekannt, dass der Knochen bis ca. 0,5 mm unterhalb der Implantat-Abutment-Verbindung (sofern sie exakt auf Knochenhöhe lag) resorbiert. Nachgewiesen ist, dass das der Implantat-Abutment-Verbindung benachbarte Gewebe (Zahnfleisch und Knochen) Entzündungszeichen aufweist. Nachweislich finden sich unter anderem polymorphkernige Leukozyten, die bei bakteriell induzierten Prozessen vorrangig sind. Als Grund für dieses Phänomen wird die Undichtigkeit der IAV und deren Besiedlung durch Bakterien diskutiert.

Das Ergebnis des Knochenverlustes ist ein Zahnfleischrückgang mit der Folge länger werdender Zähne (Implantatkronen). In ästhetisch anspruchsvollen Regionen, wie etwa im Frontzahnbereich, stellt der Knochenverlust ein großes Problem dar.

Der Dichtkörper hat vorzugsweise in Form eines Ringes, der zwischen zwei senkrecht zur Längsachse eines jeweiligen Implantatsteils verlaufenden Anschlagflächen anzuordnen ist und für eine bakteriendichte Abdichtung sorgt. Ein solcher Dichtkörper beziehungsweise Dichtring besteht vorzugsweise aus einem Kunststoffmaterial, welches eine größere Elastizität oder eine geringere Härte besitzt, als das Material der beiden Implantatsteile. Die beiden Implantatsteile bestehen vorzugsweise aus einem körperverträglichen Metall, Keramik oder Kunststoff.

In einer vorteilhaften Ausführungsvariante des zweiteiligen Zahnimplantats verlaufen die einander zugewandten Oberflächen der beiden Implantatsteile, zwischen denen der Dichtkörper angeordnet ist, quer zur Längsachse des Zahnimplantats - also in radialer Richtung - und parallel zueinander. Derartige Oberflächen sind besonders geeignet, um zwischen ihnen einen Dichtkörper anzuordnen, der die Form einer Kreisscheibe mit zentraler Durchtrittsöffnung hat. Die zentrale Durchtrittsöffnung erlaubt es, die Verbindung zwischen proximalem und distalem Implantatsteil mit Hilfe eines in axialer Richtung des Implantats verlaufenden Schraubbolzens herzustellen. Der Schraubbolzen erlaubt es auch, den Dichtkörper ausreichend so zu komprimieren, dass es zu der gewünschten Flächenpressung zwischen seinen Dichtflächen und den Oberflächen der Implantatsteile kommt. Die Flächenpressung ist hierbei durch die einander berührenden Anschlagflächen begrenzt. In bestimmten Anwendungsfällen ist es vorteilhaft, wenn der Dichtkörper im Bereich seiner äußeren Ränder dicker ist, als in einem mittleren Bereich der Dichtung. Auf diese Weise kann der Dichtkörper im Bereich ihrer Ränder beim Zusammenfügen von proximalem und distalem Implantatsteil derart verformt werden, dass seine Dichtflächen an den Oberflächen der beiden Implantatsteile exakt anliegen. In alternativen Ausführungsvarianten kann der Dichtkörper jedoch auch parallel zueinander verlaufende Dichtflächen aufweisen oder nach Art eines O-Ringes ausgebildet sein.

Die Geometrie des proximalen und des distalen Teilschafts ist im Bereich des Übergangs zwischen beiden Schaftteilen vorzugsweise derart gestaltet, dass die Verbindung zwischen beiden Schaftteilen nicht nur geeignet ist, Kaukräfte von Teilschaft zu Teilschaft direkt zu übertragen, sondern gleichzeitig auch verdrehsicher ist.

Gemäß einer bevorzugten Ausführungsvariante weist ein einen distalen Implantatsteil bildender distaler Teilschaft eine zu seinem proximalen Ende hin offene Längsöffnung mit einer Innenwandung auf, die eine Grundgeometrie mit kreisförmigen Querschnitt besitzt und in die v-förmige, sich wenigstens annähernd in Längsrichtung des Teilschaftes erstreckende, zum proximalen Ende des Teilschaftes hin offene Vertiefungen eingelassen sind. Ein einen proximalen Implantatsteil bildender Aufbauteilschaft besitzt an seinem distalen Ende eine Außenwandung mit einer Grundgeometrie mit kreisförmigem Querschnitt, die in die Längsöffnung des distalen Teilschaftes passt.

Vorzugsweise weist die Außenwandung des Aufbautteilschaftes im Bereich von dessen distalen Ende v-förmige Vorsprünge auf, die derart an die v-förmigen Vertiefungen des distalen Teilschaftes angepasst sind, dass Flankenabschnitte der v-förmigen Vertiefungen des distalen Teilschaftes mit Flankenabschnitten der v-förmigen Vorsprünge des Aufbauteilschaftes derart zusammenwirken, dass sich die v-förmigen Vorsprünge des Aufbauteilschaftes wie ein Keil in die v-förmigen Vertiefungen des distalen Teilschaftes hineinschieben, bis sich jeweils zwei Flanken eines v-förmigen Vorsprungs und zwei Flanken einer v-förmigen Vertiefung gegenseitig berühren und auf diese Weise die relative Position vom distalen Teilschaft und Aufbauteilschaft sowohl in axialer als auch in rotatorischer Richtung spielfrei fixieren, wenn der distale Teilschaft und der Aufbauteilschaft miteinander verbunden werden, beziehungsweise miteinander verbunden sind. Die einander berührenden Flanken wirken als Anschlagsflächen bilden einen definierten Höhenanschlag. Der Höhenanschlag wird durch eine definierte geometrische Form der Implantatsteile selbst dargestellt. Somit werden die von oben auf den proximalen Implantatsteil (proximaler Teilschaft) einwirkenden Kräfte lediglich auf den distalen Implantatsteil (distaler Teilschaft) übertragen. Würden die einwirkenden Kräfte nicht über den beschriebenen Höhenanschlag sondern über eine Dichtung abgeleitet werden, würde diese Dichtung über die Dauer der Verwendung zerstört werden.

Dabei bietet die Gestaltung des distalen Teilschaftes den Vorteil, dass er auch einen Aufbauteilschaft ohne v-förmige Vorsprünge aufnehmen kann, so dass die miteinander verbundenen Teilschäfte im Ergebnis zwar in axialer Richtung genauestens zueinander fixiert sind, nicht jedoch in rotatorischer Richtung. Dies ist insbesondere dann vorteilhaft, wenn der Schaft zur Befestigung eines Steges dient. Dann ist zur Aufnahme des Steges kein weiteres Element notwendig. Der Behandler muss bei der Eingliederung nur ein einziges zusammenhängendes Element mit den im Mund des Patienten befindlichen Implantatfixatoren verschrauben.

Die Flanken der v-förmigen Vorsprünge bzw. Vertiefungen erstrecken sich in Bezug auf eine senkrecht zur Längsachse des Implantats verlaufende Querschnittebene vorzugsweise radial nach außen und verlaufen somit senkrecht zur Umfangsrichtung. Dadurch werden über die sich nach Montage des Implantats berührenden Flanken keine Radialkräfte übertragen, die beispielsweise einen distalen Teilschaft aus Keramik sprengen könnten.

Falls der distale Teilschaft aus einem zugfesteren Material wie z.B. Metall, insbesondere Titan, besteht, können die Flanken gegenüber der zuvor beschriebenen streng radialen Ausrichtung auch derart geneigt sein, dass zu einem jeweiligen Vorsprung des Aufbauteilschaftes (d.h. dem proximalen Implantatsteil) bzw. zu einer jeweiligen Vertiefung des distalen Teilschaftes (distaler Implantatsteil) gehörende Flanken in nach außen gerichteter Richtung aufeinander zulaufen. Die Flanken können beispielsweise gegenüber der radialen Richtung und damit auch gegenüber der Umfangsrichtung um 45° geneigt sein. Damit haben die Flanken nicht nur in Bezug auf die Rotationsrichtung, sondern auch in lateraler Richtung eine zentrierende Wirkung.

Die Grundgeometrie der Außenwandung des Aufbauteilschaftes ist vorteilhafter Weise wenigstens im Bereich der v-förmigen Vorsprünge konisch. Entsprechend ist vorteilhafter Weise auch die Grundgeometrie der Innenwandung der Längsöffnung des distalen Teilschaftes wenigstens im Bereich der v-förmigen Vertiefungen konisch.

Für bestimmte Anwendungsfälle und insbesondere, wenn der distale Teilschaft aus Keramik besteht, kann es vorteilhaft sein, wenn die Grundgeometrie der Außenwandung des Aufbauteilschaftes sowie auch die Grundgeometrie der Innenwandung der Längsöffnung des distalen Teilschaftes wenigstens im Bereich der v-förmigen Vertiefungen zylindrisch sind.

In beiden Fällen ist die Passung zwischen Außenwandung des Aufbauteilschaftes und Innenwandung des distalen Teilschaftes wenigstens im Bereich der v-förmigen Vertiefungen vorzugsweise eine Spielpassung.

Außerdem sind am distalen Teilschaft sowie am Aufbauteilschaft vorzugsweise jeweils vier v-förmige Vertiefungen, beziehungsweise v-förmige Vorsprünge vorgesehen, die gleichmäßig auf dem Umfang des jeweiligen Teilschaftes verteilt sind. Auf diese Weise ergeben sich in Rotationsrichtung zwischen distalen Teilschaft und Aufbauteilschaft vier genau definierte Positionierungsmöglichkeiten. Alternativ können auch mehr oder weniger Vorsprünge und Vertiefungen einander entsprechender Anzahl vorgesehen sein, die vorzugsweise über den Umfang des jeweiligen Teilschaftes gleichverteilt sind. Geeignete Anzahlen sind, z. B. 3, 6 oder 8.

Auch ein Vorsprung mit einer weit geöffneten V-Form (stumpfer V-Winkel) in Verbindung mit einer entsprechenden Vertiefung im distalen Teilschaft kann sinnvoll sein.

Als V-Winkel (Öffnungswinkel der jeweiligen V-Form) kommen Winkel zwischen 10° und 170° in Betracht. Im Sinne eine selbstzentrierenden Ausführungsform ist es vorteilhaft, wenn dabei der V-Winkel kleiner ist als der Spitzenwinkel des jeweiligen Reibungskegels, der sich aufgrund der Materialpaarung der sich im Bereich der einander gegenüberliegenden Flanken der v-förmigen Vorsprünge bzw. Vertiefungen ergibt.

Ein eigener Erfindungsaspekt der sich auch auf andere, als die hier konkret vorgestellte Weise realisieren lässt, besteht darin, dass von denjenigen Stirnflächen eines distalen Teilschaftes und eines proximalen Aufbauteilschaftes, die beim Zusammenfügen der beiden Teilschäfte aufeinander treffen können, bevor die beiden Teilschäfte ihre endgültige axiale Lage relativ zueinander angenommen haben, keine der Stirnflächen in einer senkrecht zur Längsachse der beiden Teilschäfte verlaufenden Ebene liegt. Bei bekannten zweiteiligen Schäften für Zahnimplantate mit einer Rotationssicherung, die in der Regel solche senkrecht zur Längsachse verlaufenden Stirnflächen aufweisen, die bei relativ zueinander verdrehten Teilschäften aufeinander stoßen können, bevor die beiden Teilschäfte völlig in gewünschter Weise ineinander geschoben sind, besteht die Gefahr, dass ein proximaler Aufbauteilschaft an einem distalen Teilschaft in einer verdrehten Position befestigt wird, was zur Folge hat, dass sich der aus dieser falschen Montage ergebende Schaft eine größere Länge als vorgesehen besitzt, weil die beiden Teilschäfte noch nicht endgültig ineinander geschoben sind. Die eigentlich zur Begrenzung der relativen axialen Position der beiden Teilschäfte vorgesehenen Endpassungen haben sich in jenem Fall noch nicht gegenseitig berührt, weil aufgrund des Verdrehens der beiden Teilschäfte relativ zueinander zuvor wenigstens eine andere senkrecht zur Längsachse eines jeweiligen Teilschaftes verlaufende Fläche auf eine gegenüberliegende Fläche des jeweils anderen Teilschaftes gestoßen ist, die eigentlich nicht zum Eingriff mit der senkrecht zur Längsachse des ersten Teilschaftes verlaufenden Stirnfläche vorgesehen ist. Es kommt auch nicht zu einer automatischen Korrektur des Drehwinkelfehlers, weil die beiden auf diese Weise aufeinander stoßenden Flächen nicht nach Art einer schrägen Ebene aufeinander gleiten können und dadurch den Drehwinkel wieder automatisch aufheben.

Bei bekannten Schäften für Zahnimplantate müssen ein behandelnder Arzt oder ein Techniker genau darauf achten, dass die beiden Teilschäfte drehwinkelfehlerfrei ineinander gesetzt werden, damit die beiden Teilschäfte nicht in einer falschen Position relativ zueinander fixiert werden.

Bei dem erfindungsgemäßen Schaft wird dieses Problem dadurch vermieden, dass keine dieser senkrecht zur Längsachse des jeweiligen Teilschaftes verlaufenden Stirnflächen - außer den für den endgültigen Längs-Endanschlag vorgesehenen Flächen - vorgesehen sind. Dies wird konkret durch die v-förmigen Vertiefungen beziehungsweise v-förmigen Vorsprünge erreicht. Es sind aber auch andere geometrische Lösungen denkbar.

Dem liegt der Gedanke zugrunde, dass die als Längsendanschlag dienenden Flächen auf einem anderen Radius angeordnet sind, als die übrigen, zur Positionierung in Drehrichtung dienenden Stirnflächen, die im konkreten Fall von den v-förmigen Vorsprüngen und Vertiefungen gebildet sind.

Beim Ineinanderschieben der beiden Teilschäfte treffen sich die schrägen Flächen der gegenüberliegenden, v-förmigen Vertiefungen beziehungsweise v-förmigen Vorsprünge jeweils auf einer schiefen Ebene. Beim weiteren Zusammenfügen der Teilschäfte gleiten die aufeinandertreffenden Flankenflächen aufeinander, bis die beiden Teilschäfte ihre axiale relative Endposition zueinander eingenommen und auch den korrekten Drehwinkel zueinander eingenommen haben.

Geeignete Materialien für den distalen und den proximalen Implantatsteil sind insbesondere Metalle, wie Stahl oder Titan, aber auch Keramik oder Kunststoff.

Um auf günstige Weise formtreue Implantatsteile zu Schaffen, sind der proximale und der distale Teilschaft vorzugsweise entweder durch Metal-Injection-Molding (MIM; deutsch: Metallpulver-Spritzgießen) oder durch Heißfließpressen hergestellt.

Das Metal-Injection-Molding erlaubt es, in In nur einem Arbeitsschritt, dem Füllen der Spritzform, dem gesamten Bauteil seine endgültige Geometrie zu geben, die nahezubeliebig komplex sein kann.

Für das Metal-Injection-Molding wird kein massiver Metallkörper, sondern feines Pulver als Ausgangsmaterial für das herzustellende Bauteil verwendet. Dieses Pulver wird mit einem kunststoffhaltigen Binder vermischt und zu einem so.genannten Feedstock geknetet. Der Feedstock wird unter hohem Druck bei etwa 100 °C auf einer handelsüblichen Spritzgießmaschine in eine Spritzform (Werkzeug) gepresst, die ein negatives Abbild des jeweiligen Teilschaftes ist. Das so jeweils entstehende Grünteil für den proximalen oder den distalen Teilschaft hat bereits die gewünschte Endgeometrie, muss aber in den nun folgenden Schritten wieder von dem Binder befreit werden, um ein reines Metallteil zu erhalten. Dazu wird in einem mehrstufigen chemischen und thermischen Prozess der Binder entfernt und gleichzeitig über eine Sinterung bei etwa 1200 °C das Bauteil "verbacken". Als Metall kommt hierbei vorzugsweise Titan in Frage.

Wenn die Implantatsteile nicht aus Metall, sondern aus Keramik bestehen sollen, kommt Ceramic-Injection-Molding (CIM) als geeignetes Herstellungsverfahren in Frage. Das CIM-Verfahren funktioniert genau so wie MIM-Verfahren, der einzige Unterschied liegt in der Verwendung des Materials. Auch hier spricht man von Feedstock mit Keramikpulver an stelle von Metallpulver. Dementsprechend werden gemäß einer alternativen Ausführungsvariante per CIM hergestellte keramische Bestandteile des Implantats, insbesondere keramische Teilschäfte bevorzugt.

Alternative können beide Teilschäfte auch durch Kalt- oder Warm- bzw. Heißfließpressen hergestellt werden.

Für das alternative Herstellen des proximalen und des distalen Teilschaftes auf dem Wege des Heißfließpressens müssen für jede Implantatgeometrie zur Herstellung des Verbindungsbereiches der Implantat-Abutment-Verbindung zwei Umformwerkzeuge hergestellt werden.

Das erste Umformwerkzeug wird für das Verfahren des Heißfließpressens hergestellt.

Beim Heißfließpressen wird das Titan in den Bereich der "Dynamischen Rekristalisation" gebracht (das bedeutet auf eine Temperatur zwischen 700°C und 900°C erhitzt).

Der Umformvorgang des Aufbauteils (proximaler Teilschaft) wird als Warmvollvorwärtsfließpressen bzw. Heißvollvorwärtsfließpressen bezeichnet.

Der Umformvorgang des Implantatteils (distaler Teilschaft) wird als Warmnapfrückwärtsfließpressen bzw. Heißnapfrückwärtsfließpressen bezeichnet.

Dazu wird ein Stangenrundmaterial abgelängt, erhitzt und in das Umformwerkzeug eingebracht. Die Umformung findet unter hohem Pressdruck statt.

Mit einem ersten Umformschritt wird ein Ergebnis erreicht, welches schon sehr nahe an das erreichbare Endergebnis herankommt.

Nach dem ersten Umformschritt ist bereits die gesamte Geometrie der Implantatteile dargestellt, welche die Implantat-Abutmnet-Verbindung bilden. Auf Grund der thermischen Kontraktion der abgekühlten Werkstücke sind noch kleine Toleranzen vorhanden. Zudem sind die Oberflächen aufgrund der für das Heißfließpressen notwendigen starken Erwärmung der Werkstücke noch stumpf. Bei Titan besteht die Gefahr der Adhäsion (dem Verkleben des Titans mit dem Werkzeug) nicht.

In einem weiteren Umformschritt wird dann die exakte Endform und glatte, glänzende Oberflächen im Bereich der Implantat-Abutment-Verbindung zwischen den beiden Teilschäften erreicht.

Für den zweiten Umformschritt wird ein zweites Umformwerkzeug verwendet, mit dem eine Kaltkalibrierung oder eine Warmkalibrierung der Werkstücke (proximaler oder distaler Teilschaft) durchgeführt wird.

Der zweite Umformschritt kann an einem zeitlich definierten Punkt während der Abkühlphase nach dem ersten Umformschritt geschehen, in welcher das Werkstück noch eine Temperatur zwischen ca. 400°C und 450°C aufweist.

Für den zweiten Umformschritt wird das jeweilige Werkstück vollautomatisch aus dem ersten Umformwerkzeug herausgenommen und in das zweite Umformwerkzeug eingebracht.

Die Veränderung der Geometrien durch den zweiten Umformschritt fallen nur sehr gering aus, da der bevorzugte Werkstoff Titan sich im kalten und warmen Zustand gegenüber einer Umformung sehr störrisch verhält. Nachdem das Metallgitter von Titan kurzzeitig und lokal zu fließen begonnen hat, versprödet es bei weiterer Umformung recht schnell. Bei zu starker Kalt- bzw. Warmumformung wird das Titangefüge zerstört. Bei einer sehr geringen Umformung, wird jedoch neben einer definierten Endform der Werkstücke im Bereich der Implantat-Abutment-Verbindung zudem auch eine Härtesteigerung durch lokale Kaltverfestigungen der Werkstücke erreicht.

Die Umformprozesse sind nach jeweils nach dem zweiten Umformschritt abgeschlossen und die weiter vorne beschriebenen Geometrie für die Implantat-Abutment-Verbindung zwischen beiden Teilschäften ist fertig.

Der für das Heißfließpressen mit den beiden vorbeschriebenen Umformschritten benötigte Werkzeugsatz zum Umformen jeweils einer Implantkomponente besteht jeweils aus zwei Umformwerkzeugen.

Zur Herstellung der Umformwerkzeuge werden zunächst Graphitkörper auf einer 5-Achs-Micro-Fräse hergestellt. Zur Herstellung des Umformwerkzeugs werden die Graphitkörper mittels der Funkenerosion in einen Block aus gehärtetem Stahl einerodiert.

Die so entstandenen Oberflächen des Umformwerkzeugs, welche später die Serienteile prägen, müssen in einem sehr aufwändigen Prozess von Hand poliert werden.

Eventuell kann es erforderlich sein, ein oder beide Werkstücke (proximaler oder distaler Teilschaft) in Bereichen außerhalb der Implantat-Abutment-Verbindung weiter zu bearbeiten.

Die evenrtuell erforderliche Formgebung der Werkstücke bis zur gewünschten Endform wird durch Zerspanen erreicht. Diese Formgebung betrifft die Geometrien von proximalen Teilbereichen des proximalen Teilschaftes für entsprechende Aufbauten, z.B: Kronen sowie die Geometrien von distalen Teilbereichen des distalen Teilschaftes zum Schaffen einer künstlichen Zahnwurzel.

Für eine derartige spanabhebende Formgebung müssen die Werkstücke in einer Werkstückhalterung einer entsprechenden Maschine eingespannt werden. Hierzu biete es sich an, die Werkstücke an den durch das Heißfließpressen erzeugte, exakten Geometrien der Werkstücke zu greifen und während des Zerspanens gehalten.

Um Ungenauigkeiten auszuschließen, wird jedes Werkstück für das Zerspanen lediglich einmal gespannt.

Als Maschine für die spanabhebende Formgebung eignet sich ein Drehbearbeitungszentrum, also eine Maschine, auf der alle notwendigen spanabhebenden Bearbeitungsschritte hintereinander abgearbeitet werden können.

Zum Erreichen der Endform des Aufbaus und des Implantates ist in der Regel sowohl die Verwendung von stehenden Werkzeugen (beim Drehen) als auch von rotierenden Werkzeugen (beim Fräsen) notwendig. Auch eine axiale Durchgangsbohrung im proximalen Teilschaft sowie eine axiale Bohrung mit Innengewinde zur Aufnahme eines beide Teilschäfte verbindenden Schraubbolzens wird in diesem Prozess eingebohrt. In den Figuren sind ein Ausführungsbeispiel eines erfindungsgemäßen Schaftes für ein Zahnimplantat einschließlich einiger Varianten für den Dichtkörper sowie ein Ausführungsbeispiel eines Dichtkörperträgers als Hilfswerkzeug für die Montage der beiden Teilschäfte näher dargestellt. Von den Figuren zeigen:
- Figur 1:: eine perspektivische Darstellung eines Aufbauteilschaftes als proximalem Implantasteil;
- Figur 2:: eine perspektivische Darstellung des distalen Teilschaftes als distalem Implantatsteil;
- Figur 3:: eine Darstellung des Schaftes mit miteinander verbundenen distalen Teilschaft und Aufbauteilschaft, wobei der distale Teilschaft teiltransparent dargestellt ist;
- Figur 4:: den distalen Teilschaft und den Aufbauteilschaft nach Art einer Explosionszeichnung in perspektivischer Darstellung;
- Figur 5:: einen Längsschnitt durch den Schaft;
- Figur 6:: einen Querschnitt durch den Schaft der in Figur 5 mit D-D bezeichneten Stelle;
- Figur 7:: eine Explosionszeichnung des Schaftes mit all seinen Bestandteilen, nämlich proximalem und distalem Teilschaft, Dichtkörper sowie Schraubbolzen zum Verbinden der Teilschäfte zum Schaft;
- Figur 8:: einen Längsschnitt durch den fertig montierten Schaft gemäß Figur 7;
- Figur 9:: einen Längsschnitt durch den distalen Teilschaft;
- Figur 10:: einen weiteren, gegenüber Fig. 8 um 30° gedrehten Längsschnitt durch den distalen Teilschaft;
- Figur 11:: einen Längsschnitt durch den proximalen Teilschaft;
- Figur 12:: einen Schnitt ähnlich Figur 8, jedoch ohne Dichtkörper;
- Figur 13:: eine bevorzugte Gestaltung der in Bezug auf die Längsachse des Schaftes außen liegenden Flächen von distalen Teilschaft und proximalen Aufbauteilschaft und eines Dichtringes in einer geschnittenen Darstellung;
- Figur 14:: die Außenkontur eines bevorzugten Überganges von proximalen zu distalen Teilschaft in einer perspektivischen Außenansicht;
- Figur 15:: eine vergrößerte Detailansicht einer Ausführungsvariante eines Aufbauteilschaftes gemäß den Ausführungsbeispielen in den Figuren 7 und 8 perspektivischer Darstellung;

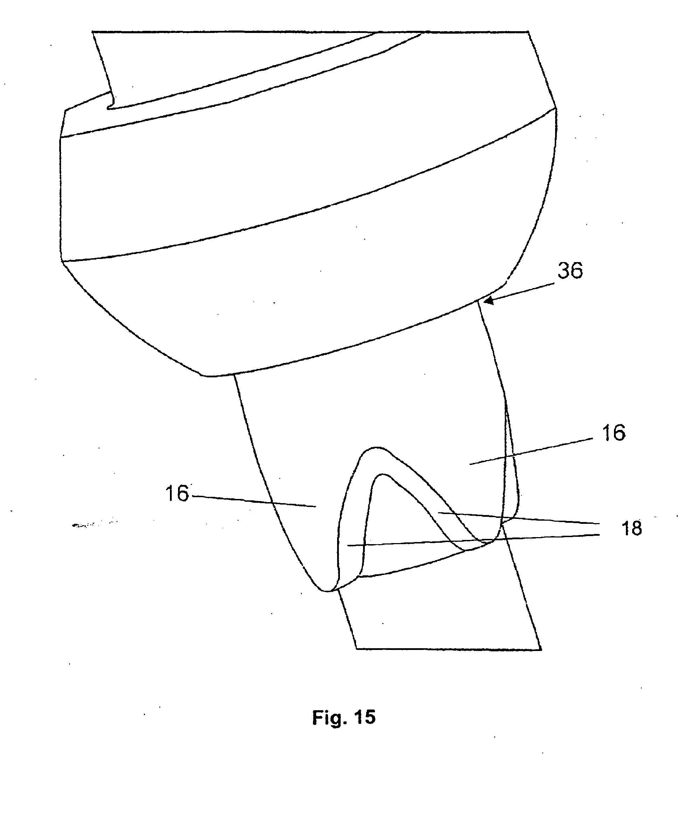

- Figur 15:: eine Detailansicht eines zweiteiligen Zahnimplantats mit einer bevorzugten Elastomerdichtung;

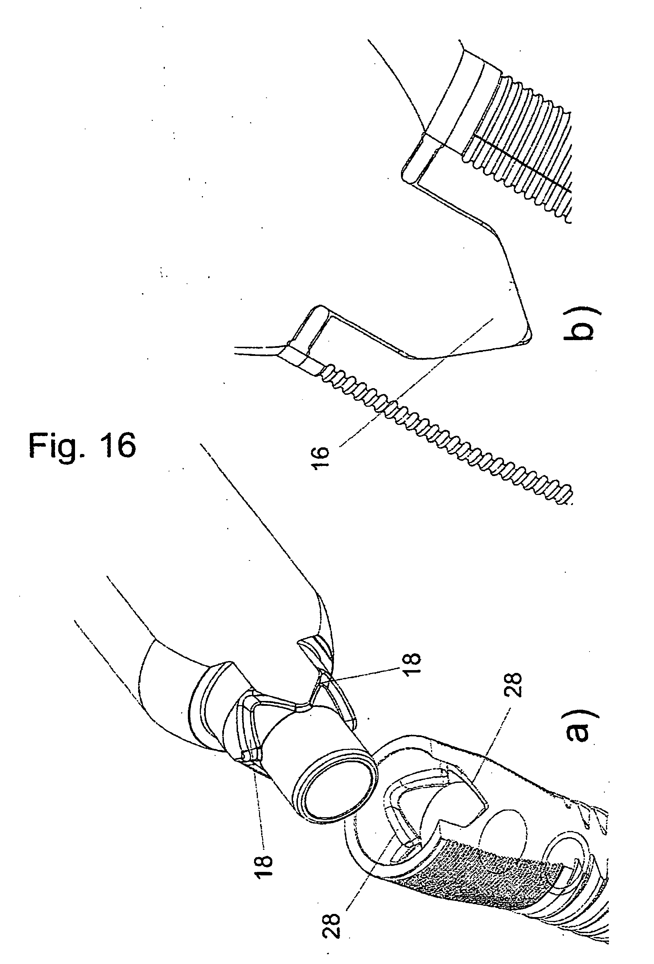

- Figuren 16a bis c:: das Prinzip der einander zugewandten Anschlagflächen, die die maximale Kompression der Dichtung begrenzen;

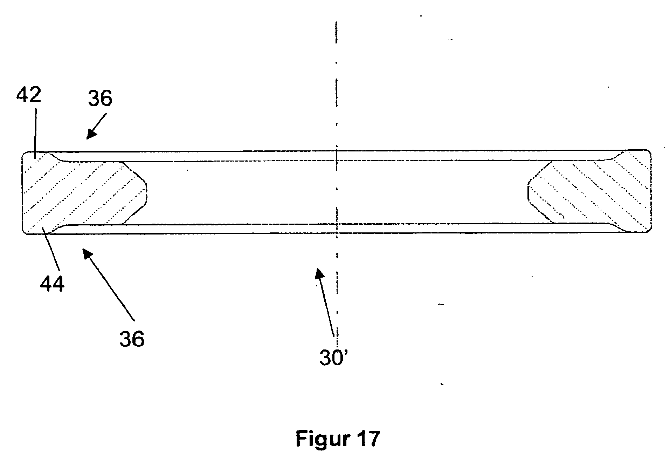

- Figur 17:: einen bevorzugten, ringförmigen Dichtkörper aus einem Elastomer;

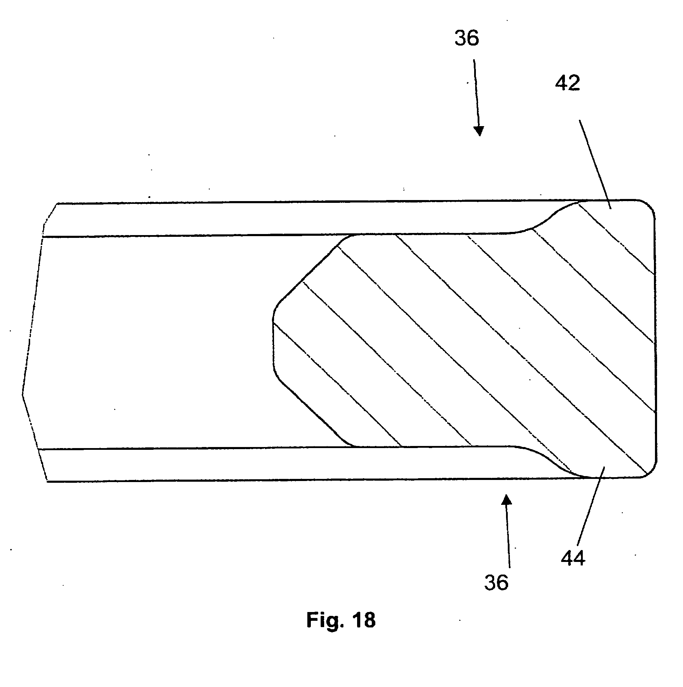

- Figur 18:: eine vergrößerte Detailansicht aus Figur 17;

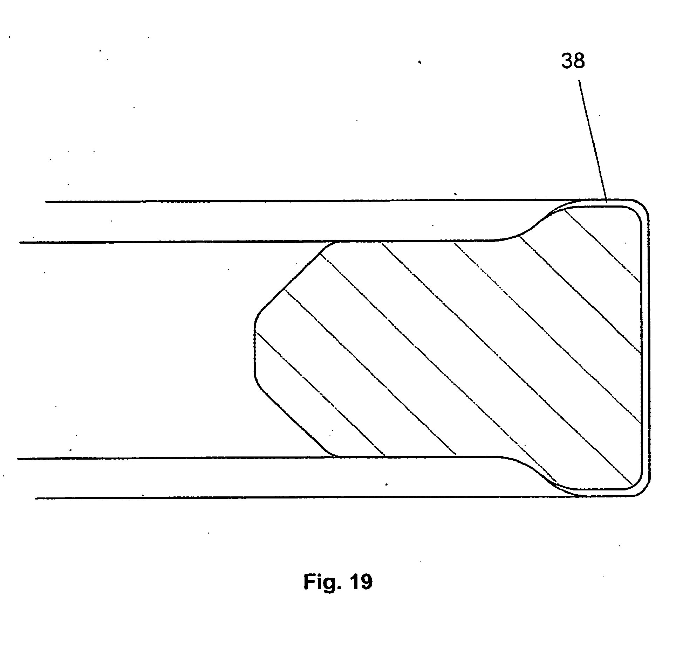

- Figur 19:: eine teilweise mit einer Nanobeschichtung beschichteten Dichtkörper gemäß Figuren 17 und 18;

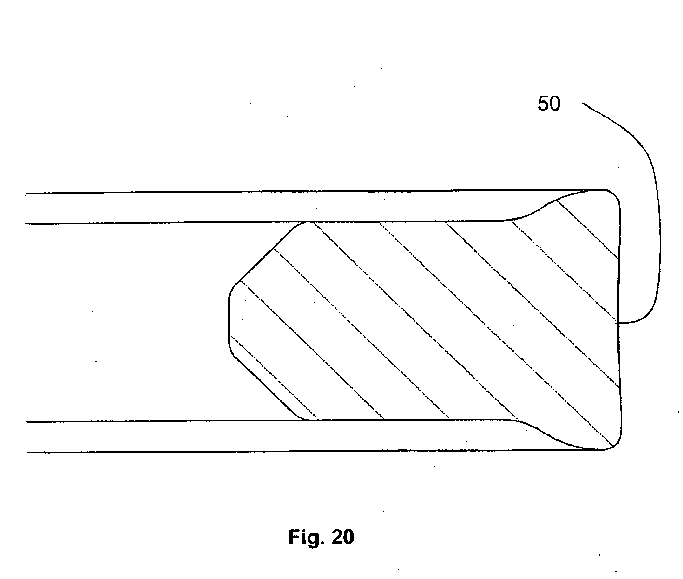

- Figur 20:: einen Dichtkörper ähnlich dem aus Figuren 17 und 18 mit einer konkaven äußeren Mantelfläche;

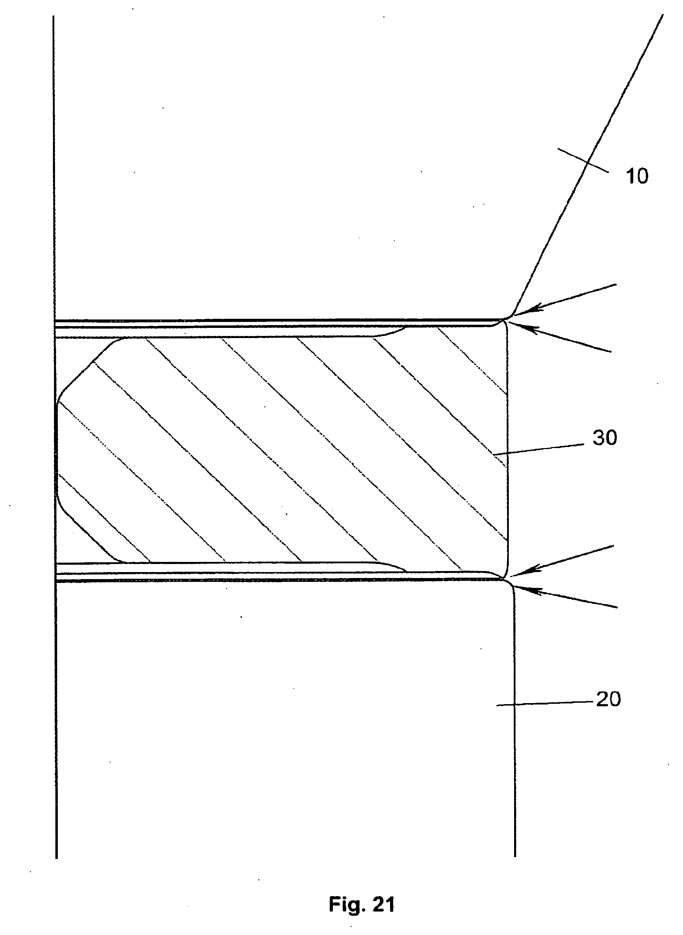

- Figur 21:: der Dichtkörper 30 in seinem fertig montierten, komprimierten Zustand zwischen proximalem und distalem Teilschaft;

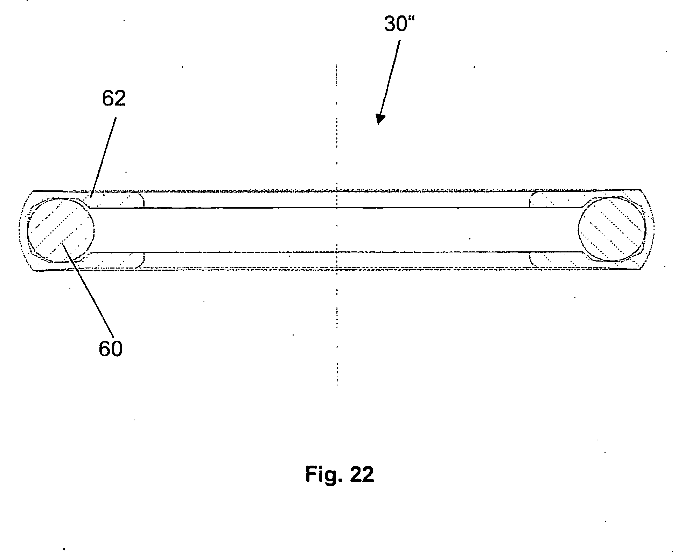

- Figur 22:: einen alternativen Dichtkörper im Querschnitt;

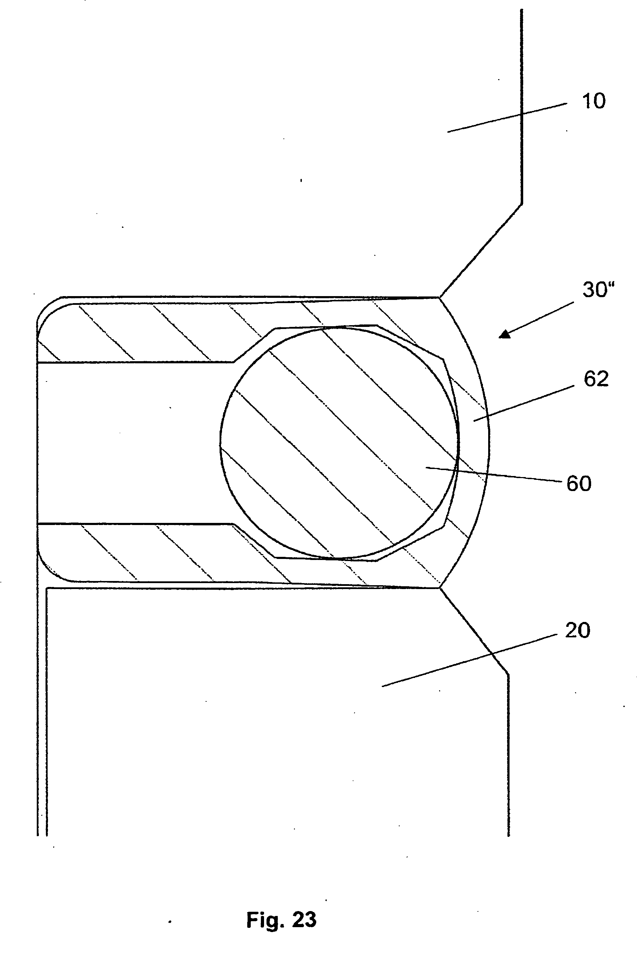

- Figur 23:: den alternativen Dichtkörper aus Figur 22 in seinem fertig montierten, komprimierten Zustand zwischen proximalem und distalem Teilschaft;

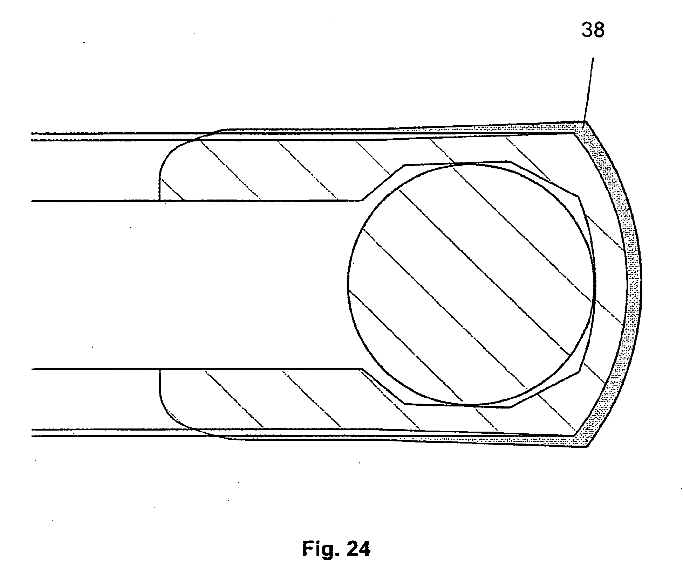

- Figur 24:: den alternativen Dichtkörper aus Figur 22 mit einer Nanobeschichtung;

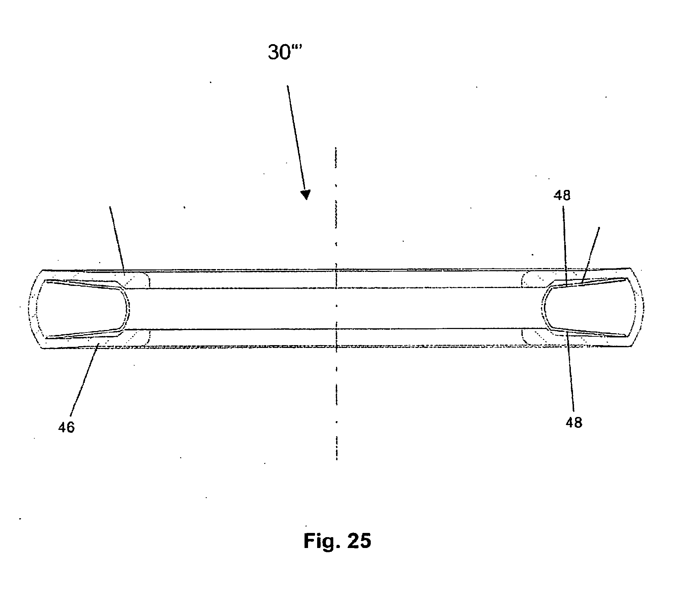

- Figur 25:: einen zweiten alternativen Dichtkörper mit Nanobeschichtung und integrierter Metallfeder im Querschnitt;

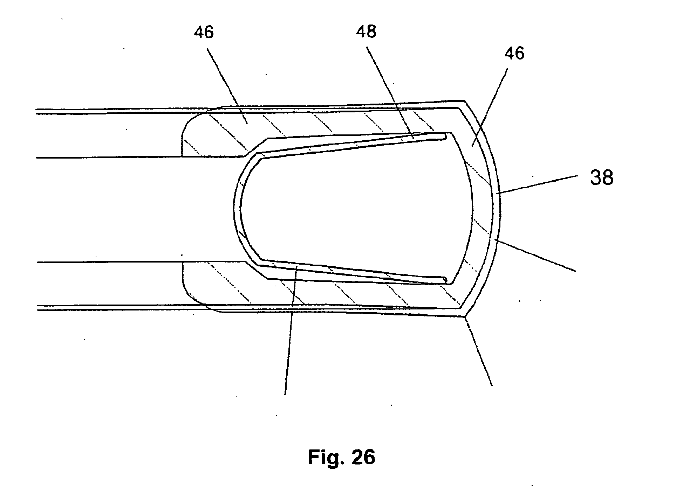

- Figur 26:: einen vergrößerten Ausschnitt des zweiten, alternativen Dichtkörpers aus Figur 25:

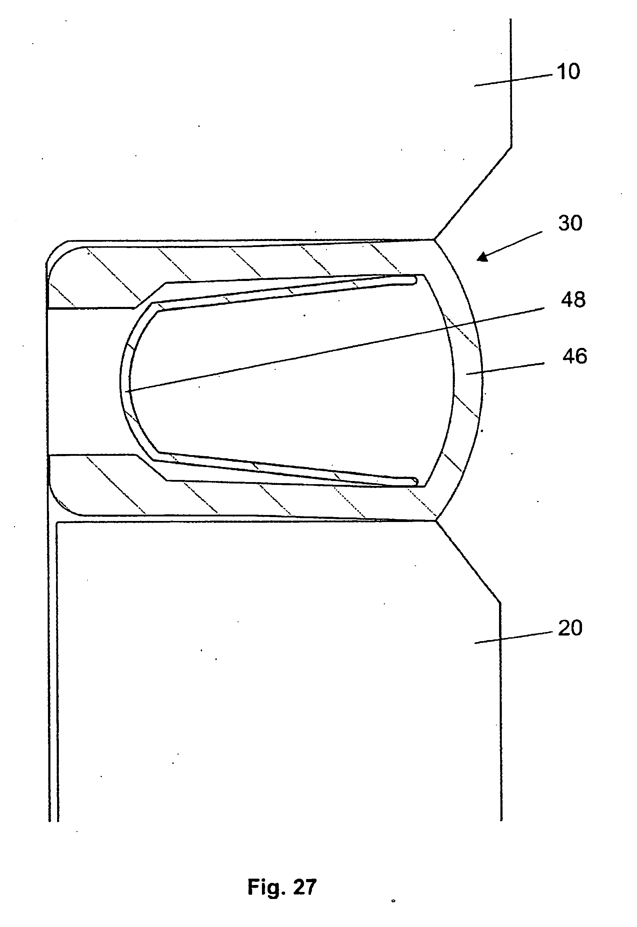

- Figur 27:: den alternativen Dichtkörper aus Figuren 25 und 26 in seinem fertig montierten, komprimierten Zustand zwischen proximalem und distalem Teilschaft;

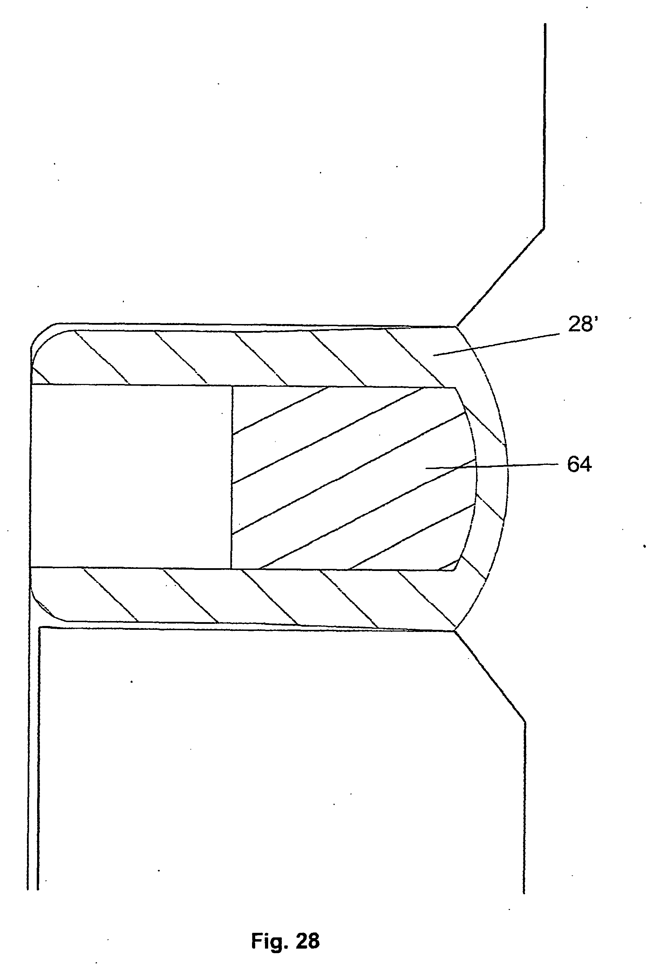

- Figur 28:: den zweiten alternativen Dichtkörper aus Figuren 25 und 26 mit einer Nanobeschichtung;

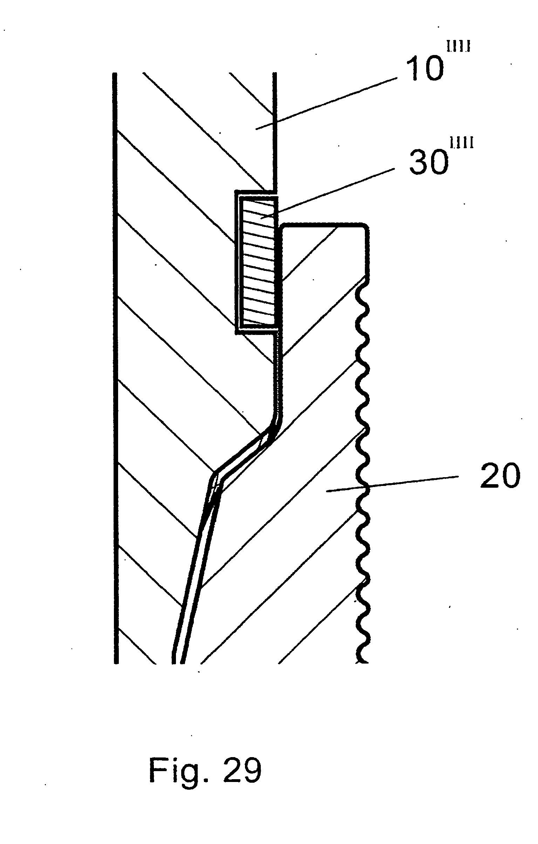

- Figur 29:: eine alternative Ausführungsvariante einer Dichtung;

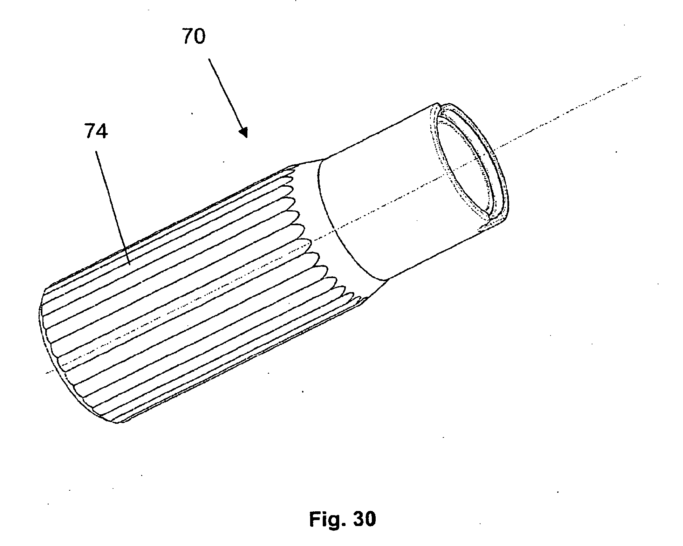

- Figur 30:: eine perspektivische Darstellung eines Dichtkörperträgers, welcher nicht Teil der Erfindung ist;

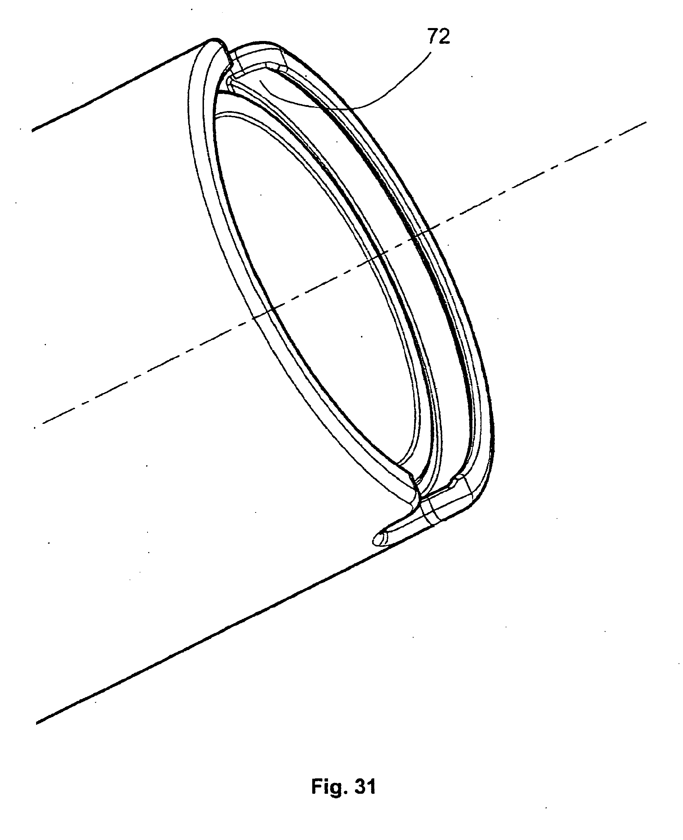

- Figur 31:: einen vergrößerten Ausschnitt der Dichtkörperaufnahme des Dichtköperträgers in perspektivischer Darstellung gemäß Figur 30;

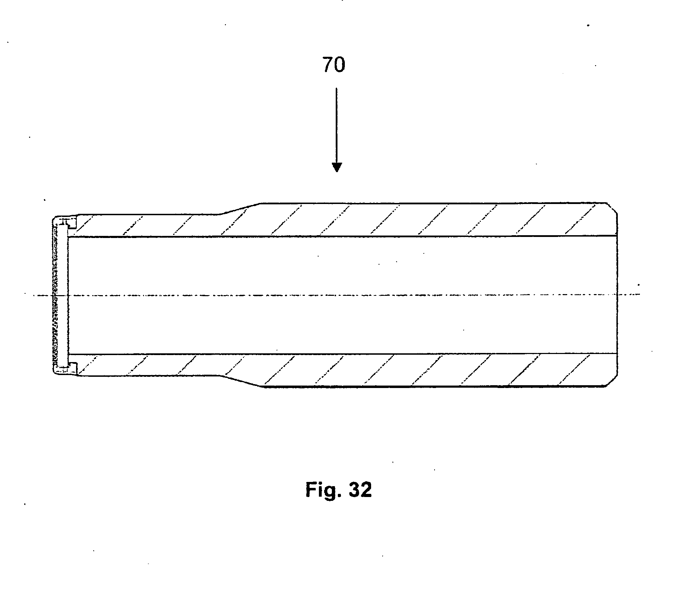

- Figur 32:: einen Längsschnitt durch den Dichtkörperträger aus Figur 30;

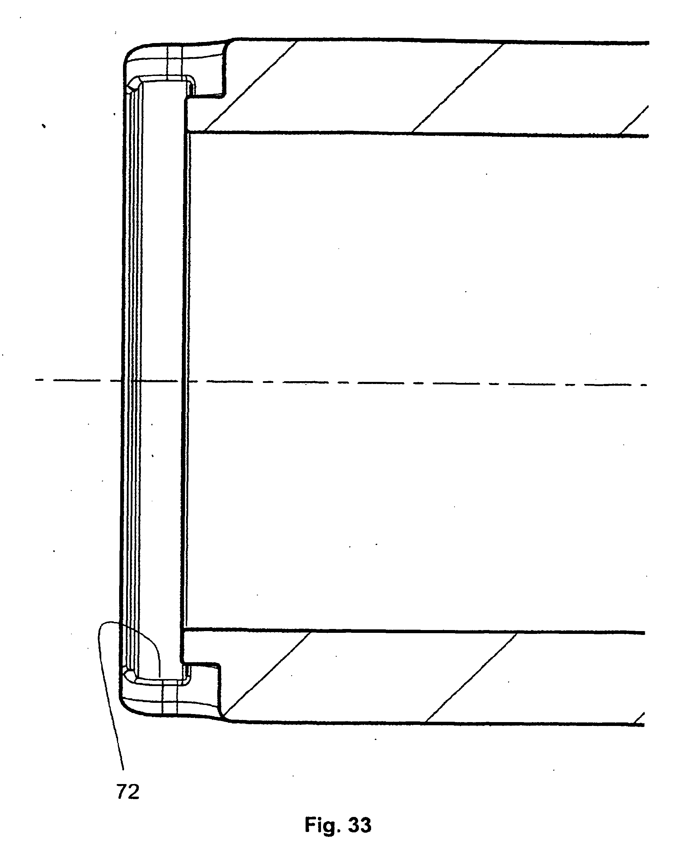

- Figur 33:: einen vergrößerten Ausschnitt der Dichtkörperaufnahme des Dichtköperträgers im Längsschnitt gemäß Figur 32;

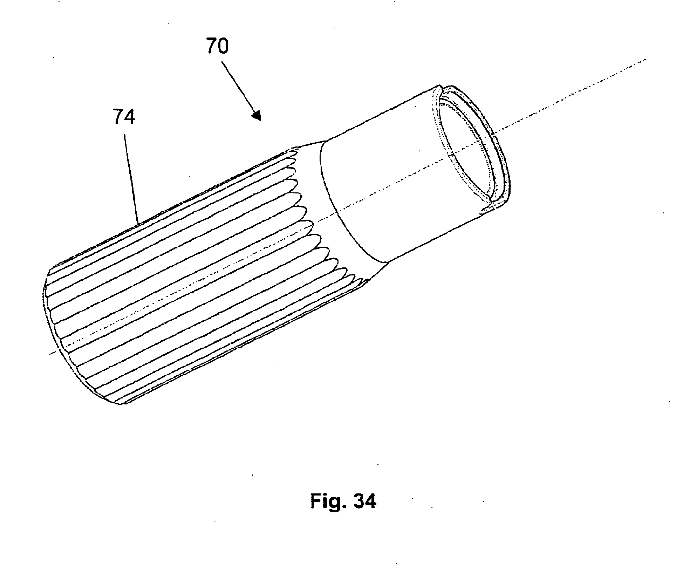

- Figur 34:: eine perspektivische Darstellung des Dichtkörperträgers mit eingesetztem Dichtkörper;

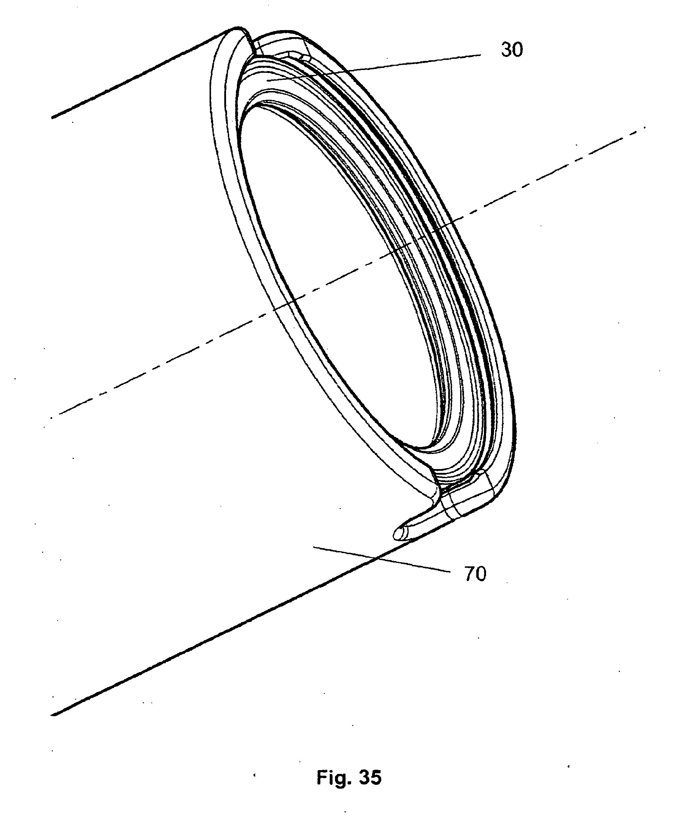

- Figur 35:: einen vergrößerten Ausschnitt aus der perspektivischen Darstellung des Dichtkörperträgers mit eingesetztem Dichtkörper in Figur 34;

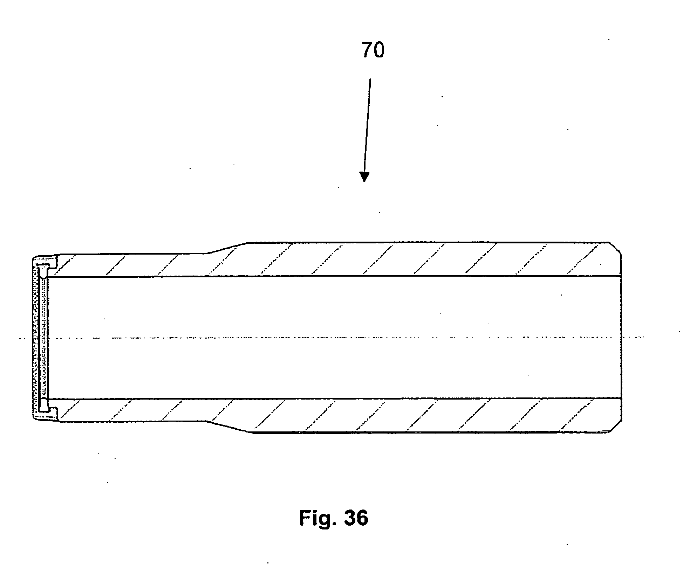

- Figur 36:: einen Längsschnitt durch den Dichtkörperträger mit eingesetztem Dichtkörper gemäß Figur 34;

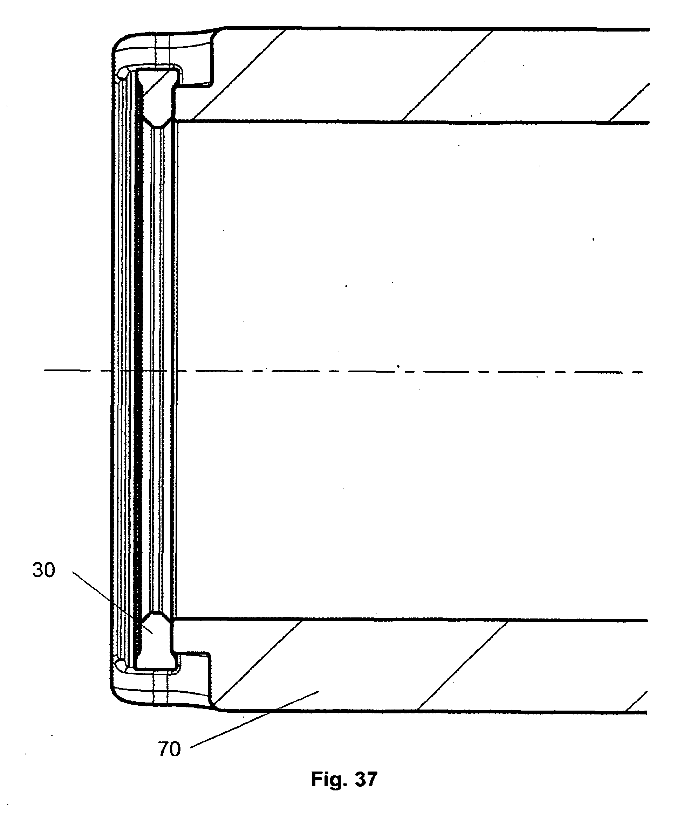

- Figur 37:: einen vergrößerten Ausschnitt aus dem Längsschnitt des Dichtkörperträgers mit eingesetztem Dichtkörper gemäß Figur 36;

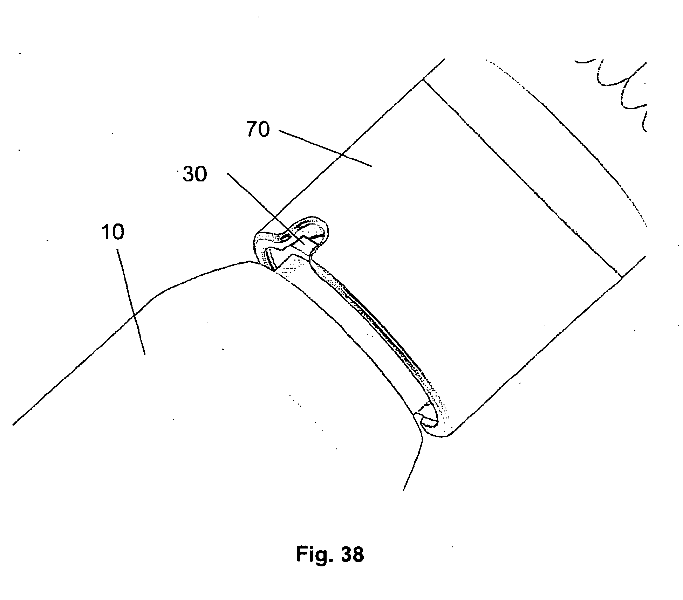

- Figur 38:: den Dichtkörperträger aus Figuren 30 bis 37 mit eingesetztem Dichtkörper beim Aufsetzen des Dichtkörpers auf den proximalen Schaftteil.

Bei dem in den Ausführungsbeispielen abgebildeten zweiteiligen Zahnimplantat wird ein proximaler Implantatsteil von einem Aufbauteilschaft 10 und ein distaler Implantatsteil von einem distalen Teilschaft 20 gebildet.

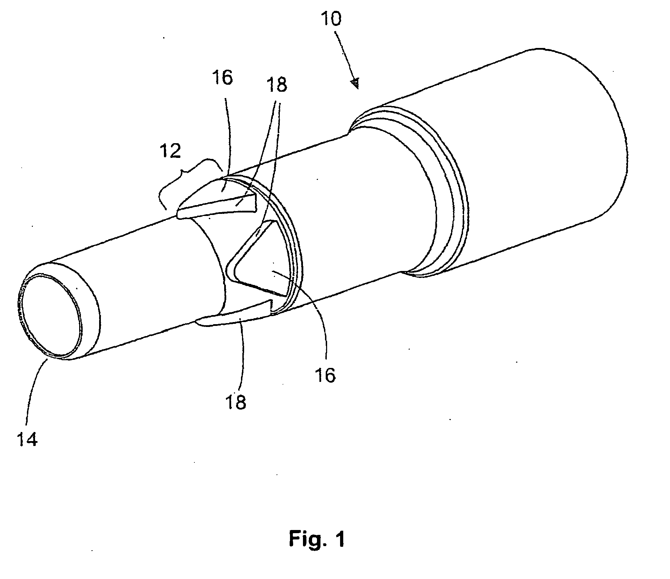

Wie der in Figur 1 wiedergegebenen perspektivischen Darstellung des Aufbauteilschaftes 10 zu entnehmen ist, besitzt dieser einen Längsabschnitt 12, mit einer sich zum distalen Ende 14 des Aufbauteilschaftes 10 hin verjüngenden, konischen Grundgeometrie. Der Konuswinkel beträgt 10°. Im Bereich dieses konischen Längsabschnitts 12 weist der Aufbauteilschaft 10 insgesamt vier v-förmige Vorsprünge 16 auf, die mit ihren Spitzen zum distalen Ende 14 des Aufbauteilschaftes 10 hinweisen. Die vier v-förmigen Vorsprünge 16 wirken als dreieckige Zacken und sind symmetrisch und im gleichen Abstand voneinander um den Umfang des konischen Längsabschnitts 12 des Aufbauteilschaftes 10 angeordnet. Auf diese Weise ergeben sich acht schräg zum distalen Ende 14 des Aufbauteilschaftes 10 weisende Flankenflächen 18.

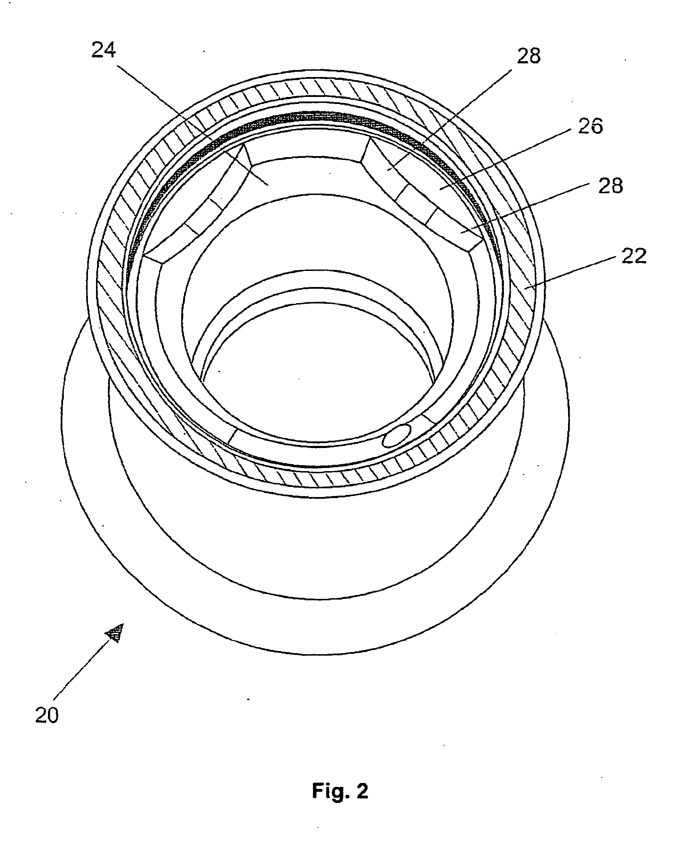

In Figur 2 ist der distale Teilschaft 20 perspektivisch dargestellt. Dieser besitzt eine zu seinem proximalen Ende 22 hin offene Längsöffnung mit einer Innenwandung 24, die ebenfalls eine konusförmige Grundgeometrie aufweist. In die Innenwandung 24 sind vier v-förmige Vertiefungen 26 eingelassen, die schräg zum proximalen Ende 22 des distalen Teilschaftes 20 hinweisende Flankenflächen 28 aufweisen.

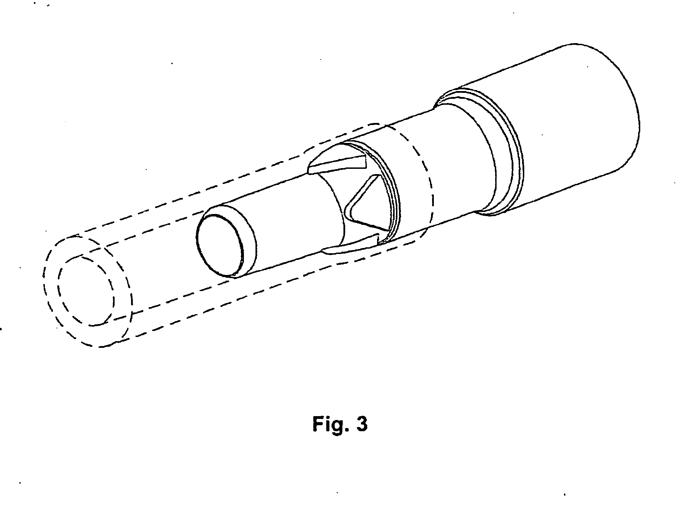

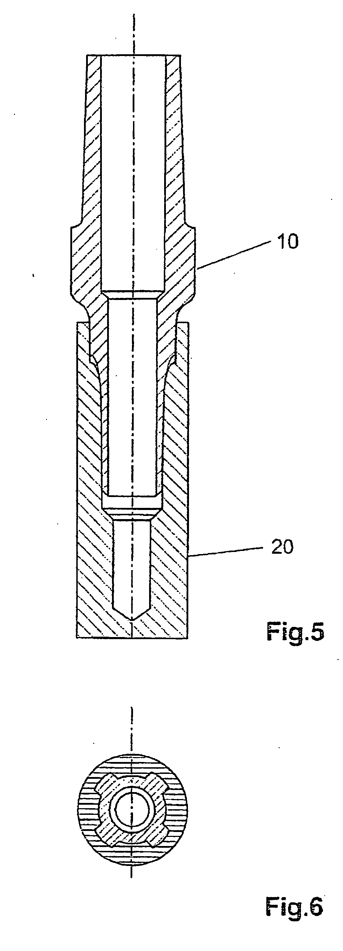

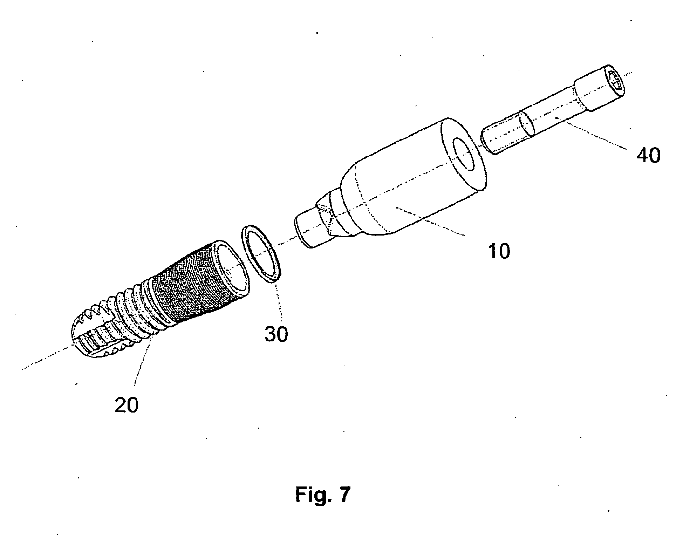

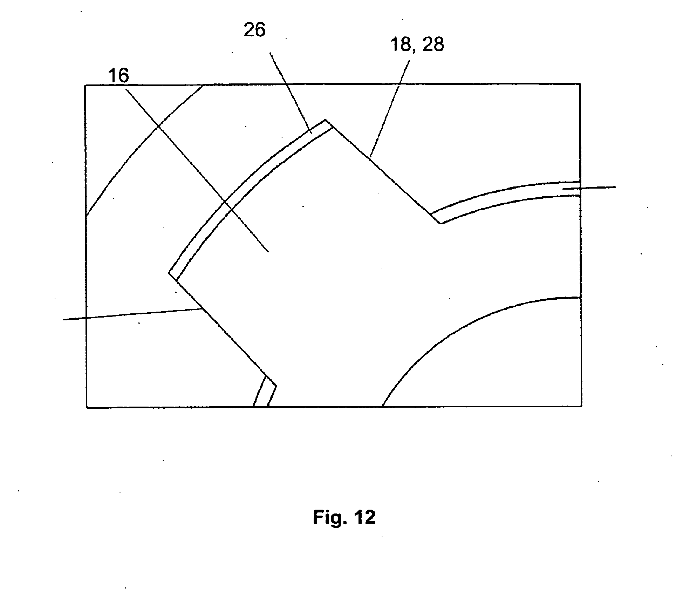

Wenn der distale Teilschaft 20 und der proximale Aufbauteilschaft 10 miteinander verbunden sind (siehe Figur 3), ist die relative Position der beiden Teilschäfte sowohl in axialer Richtung als auch in rotatorischer Richtung durch eng aufeinander aufliegende Flankenflächen 18 beziehungsweise 28 genauestens definiert. Die schrägen Flankenflächen 18 beziehungsweise 28 der v-förmigen Vorsprünge beziehungsweise Vertiefungen bilden somit einander zugewandte Anschlagflächen, die die Annäherung der beiden einander zugewandten Oberflächen 32 und 34 (siehe Figuren 6 und 7) und damit die maximale Kompression der Dichtung 30 (Figuren 6 und 7) begrenzen. Dies ist in Figuren 12a bis 12c bildlich dargestellt. Insbesondere zeigt Figur 12c, wie sich die Flächen 18 und 28 im fertig montierten Zustand des Zahnimplantats berühren und somit einen Längsanschlag bilden. Eine exakte Zentrierung der beiden Teilschäfte erfolgt bei der Montage durch die sich jeweils gegenüberliegenden, schrägen Flankenflächen 18 beziehungsweise 28 der v-förmigen Vorsprünge beziehungsweise Vertiefungen. Beim Einsetzen des Aufbauteilschaftes 10 in die Längsöffnung des distalen Teilschaftes 20 treffen sich die schrägen Flankenflächen 18 bzw. 28 der Vorsprünge beziehungsweise Vertiefungen jeweils auf einer schiefen Ebene. Der Aufbauteilschaft 10 gleitet somit beim weiteren Einsetzen in die Längsöffnung des distalen Teilschaftes 20 bis er seine axiale Endposition erreicht und rotiert dabei soweit, bis alle einander gegenüberliegenden Flankenflächen 18 und 28 gleichmäßigen Kontakt miteinander haben. Dadurch wird der Aufbauteilschaft 10 ohne ein Gleithindernis in seine gewünschte Endposition gezwungen und kann anschließend durch einen in Längsrichtung des Schaftes verlaufenden Schraubbolzen 40 (siehe Figur 7) fixiert werden. Dieser Schraubbolzen 40 wird mit einer Kraft von 30 Ncm angezogen.

Die gleichzeitig als Längsanschlag und der Rotationssicherung dienenden, korrespondierenden Flankenflächen 18 und 28 sind anschließend vorteilhafter Weise im Inneren der Längsöffnung des distalen Teilschaftes 20 versenkt und liegen nicht wie bei anderen Systemen im Bereich der Implantatschulter. Die Implantatschulter kann somit auf exakt gleichem Niveau gehalten werden.

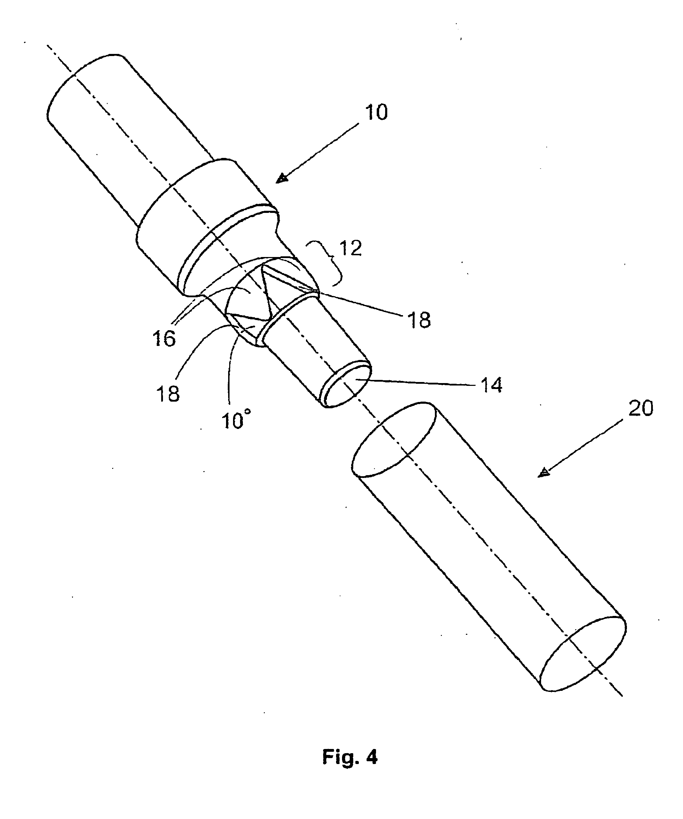

Bei den in Figuren 1 bis 5 dargestellten Ausführungsvarianten sind keine besonderen Maßnahmen dargestellt, um den Übergang vom proximalen Aufbauteilschaft zum distalen Teilschaft im Bereich der Außenkontur des fertig montierten Schaftes bakteriendicht zu gestalten.

Gemäß der in Figur 6 dargestellten Ausführungsvariante ist zu diesem Zweck ein Dichtring 30 vorgesehen, der zwischen einer außenliegenden Stirnfläche 32 des proximalen Aufbauteilschaftes 10' und einer dieser gegenüber liegenden, außen liegenden Stirnfläche 34 des distalen Teilschaftes 20' angeordnet ist. Bei fertig montiertem Schaft, also wenn der proximale Aufbauteilschaft 10' und der distale Teilschaft 20' ihre endgültige axiale Relativposition zueinander eingenommen haben, ist der Dichtring 30 in axialer Richtung komprimiert. Der Dichtring 30 besteht aus einem biokompatiblen Kunststoff.

In Figur 7 sind die wesentlichen Bestandteile des erfindungsgemäßen Schaftes für ein Zahnimplantat in einer Explosionszeichnung dargestellt, nämlich, der proximale Teilschaft 10, der distale Teilschaft 20, der Dichtkörper 30 zum Abdichten des Übergangs zwischen proximalem und distalem Teilschaft und der Schraubbolzen 40, der dem Verschrauben von proximalem und distalem Teilschaft dient.

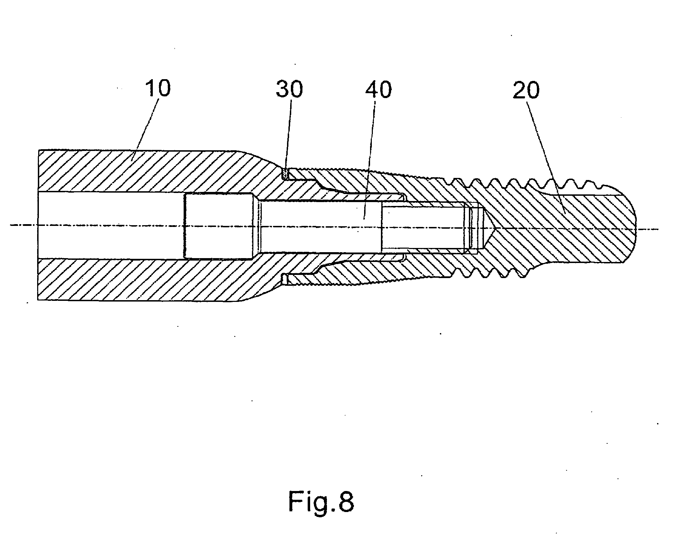

Der Längsschnitt durch den erfindungsgemäßen Schaft für ein Zahnimplantat in Figur 8 zeigt sämtliche der wesentlichen Bestandteile in fertig montiertem Zustand mit entsprechend komprimiertem Dichtkörper 30.

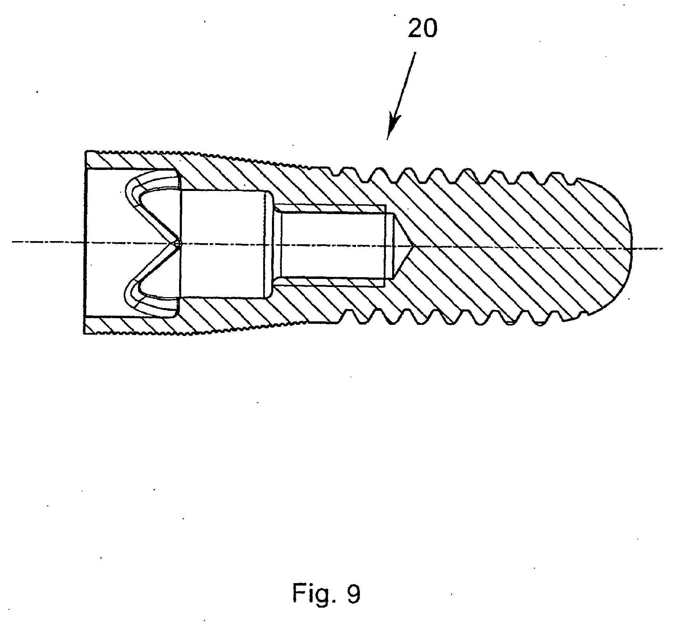

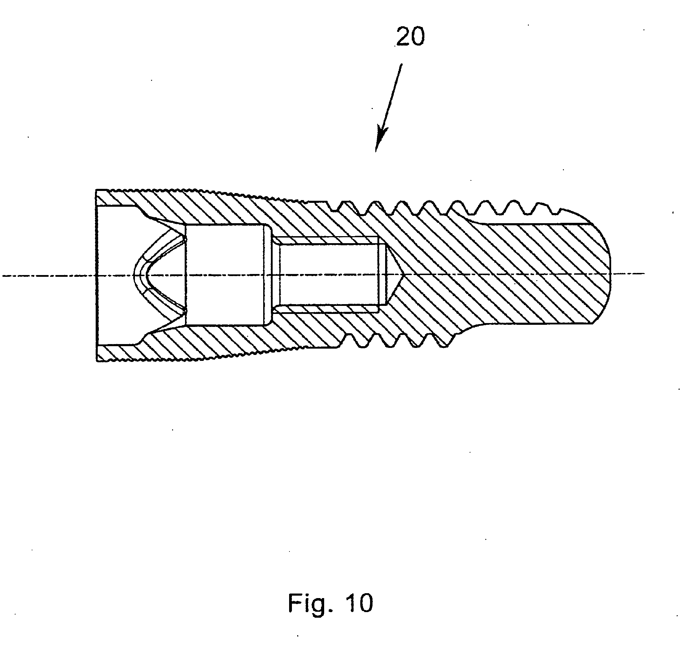

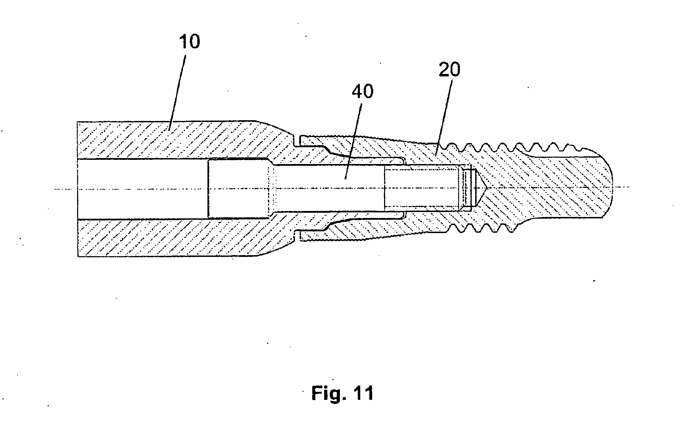

Figuren 9 bis 11 zeigen einzelne Bestandteile in einem jeweiligen Längsschnitt.

In Figur 12 ist dargestellt, wie die Flanken 26 bzw. 28 der Vorsprünge 16 am proximalen Teilschaft 10 respektive der Vertiefungen 26 am distalen Teilschaft 20 derart zusammenwirken, dass sich eine Zentrierung über diese Flanken und nicht etwa über die dazwischen liegenden Mantelflächen der Teilschafte 10 und 20 ergibt.

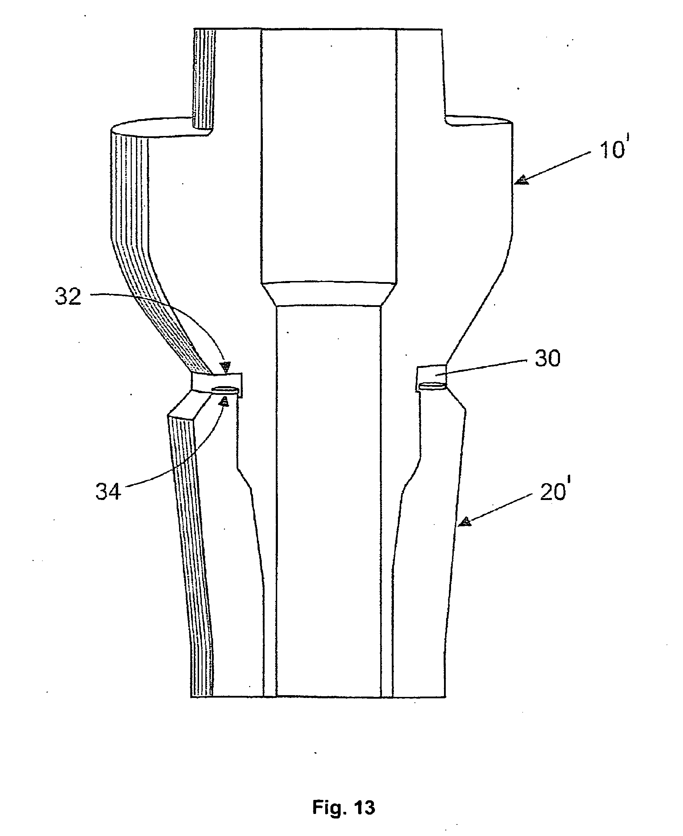

Die in Figur 13 perspektivische und teilweise geschnitten vergrößert dargestellte Ansicht des Übergangs zwischen Aufbauteilschaft 10' und distalen Teilschaft 20' zeigt, dass die Außenkontur des fertig montierten Schaftes im Übergangsbereich von Aufbauteilschaft 10' zu distalen Teilschaft 20' keine Zwickel aufweist, bei denen die Gefahr besteht, dass sich in ihnen dauerhaft Bakterien festsetzen.

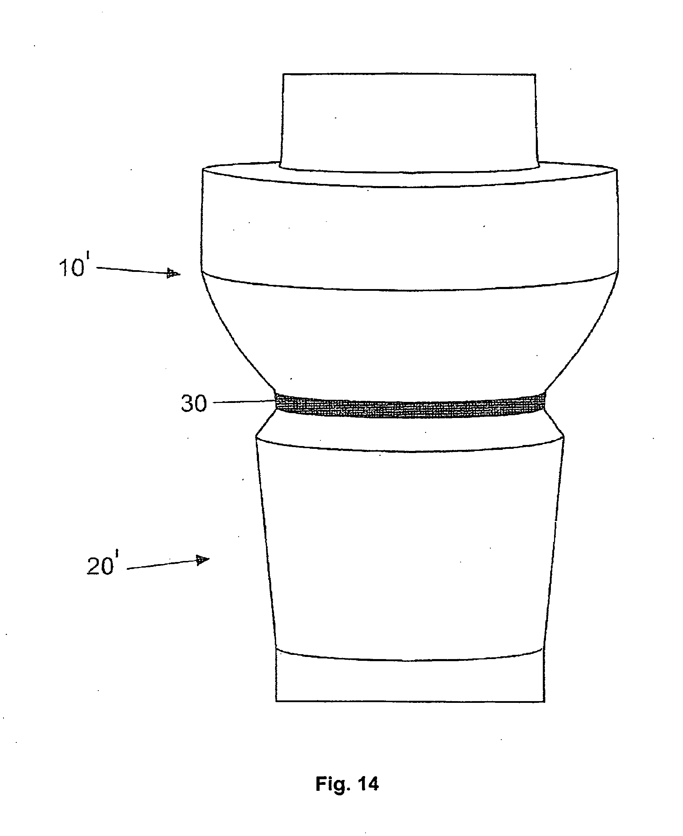

Dies ergibt sich ebenso aus der Außenansicht des Übergangs zwischen des Übergangs zwischen Aufbauteilschaft 10' und distalen Teilschaft 20' in Figur 14.

Figur 15 zeigt eine vergrößerte Detailansicht des proximalen Aufbauteilschaftes 10' in perspektivischer Darstellung. Es sind ein Sitz 36 für den Dichtkörper 30 ebenso gut zu erkennen wie die auch bereits mit bezug auf Figuren 1 bis 6 diskutierten v-förmigen Vorsprünge 16.

Figur 16 zeigt, wie die Flanken 18 und 28 als Anschlagflächen in Längsrichtung wirken und so für eine definierte Kompression des Dichtkörpers 30 sorgen (siehe auch Figur 12).

Figuren 17 und 18 zeigen einen bevorzugten Dichtkörper 30', der aus einem Elastomer wie FFKM besteht, im Querschnitt. Es ist zu erkennen, dass die Dichtflächen 36 des Dichtkörpers 30' nicht eben, sondern am äußeren Rand des Dichtkörpers in axialer Richtung des Implantats vorstehen und auf diese Weise Wülste 42 und 44 bilden. Diese Wülste werden beim strammen Verbinden von proximalem und distalem Implantatsteil verformt und stellen so eine sichere Dichtung her.

Figur 19, zeigt den Dichtkörper 30' aus Figuren 17 und 18 mit einer Beschichtung 38 aus Parylene, wie sie Eingangs beschrieben ist. Figur 18 ist auch zu entnehmen, dass die beschichten Kanten des Dichtkörpers 30' verrundet sind, um ein Abplatzen der Beschichtung im Bereich dieser Kanten zu verhindern.

Figur 20 zeigt, dass die äußere Mantelfläche 50 des Dichtkörpers konkav geformt sein kann, so dass sie infolge der Kompression des Dichtkörpers nach der Montage des erfindungsgemäßen Schaftes für ein Zahnimplantat möglichst annähernd gerade gestreckt ist.

Figur 21 zeigt die Verrundung der Kanten von Dichtkörper 30 und den Teilschäften 10 und 20 an den durch Pfeil markierten Stellen.

Figur 22 bis 24 zeigen einen alternativen Dichtkörper 30" mit einem Elastomerkörper 60 in Form eine O-Ringes, der in Ringelement 62 mit nach innen offenem, u-förmigem Querschnitt eingesetzt ist.

Figur 22 zeigt den alternativen Dichtkörper 30" im Querschnitt. Figur 23 zeigt in einer vergrößerten Ausschnittsdarstellung den alternativen Dichtkörper 30" im eingebauten Zustand zwischen proximalem Teilschaft 10 und distalem Teilschaft 20. Figur 24 zeigt, dass auch der alternative Dichtkörper 30" eine Beschichtung 38 beispielsweise aus Parylene aufweisen kann.

Figuren 25 bis 27 zeigen beispielhaft eine weitere alternative Ausführungsvariante eines Dichtkörpers 30"', der im Inneren eine Metallfeder 48 aufweist. Die Metallfeder 48 ist in einen elastischen Kunststoffkörper 46, der ringförmig ausgebildet ist und einen u-förmigen, nach innen offenen Querschnitt aufweist. Der Kunststoffkörper besteht vorzugsweise aus PTFE und die Metallfeder 48 aus rostfreiem Stahl. Wie Figur 26 zeigt, kann der Kunststoffkörper 46 außen eine Beschichtung 38, beispielsweise aus Parylene aufweisen. Außen ist der Kunststoffkörper 46 mit einer wenige Nanometer dicken Schicht 38 bedeckt, die in der dargestellten, bevorzugten Ausführungsvariante Titanpartikel enthält. Die Dicke der Schicht 38 ist in der Figur stark übertrieben dargestellt, um die Schicht sichtbar zu machen. Eine derartige Nanobeschichtung kann auf allen Außenflächen des Dichtkörpers vorgesehen sein, und zwar unabhängig von der äußeren Form des Dichtkörpers.

In alternativen Ausführungsvarianten können die Federn auch aus einem anderen federnden Material bestehen, beispielsweise aus Titan oder aus einem Kunststoff wie PEEK. Auch können die Federn eine andere Form besitzen, solange sie eine Federwirkung In durch die strichpunktierte Linie angedeutete Längsrichtung des Dichtkörpers ausüben (siehe Figur 25).

Figur 28 zeigt einen Dichtkörper, bei dem ein ringförmiger Kunststoffkörper, z.B. aus PTFE mit nach innen offenem, u-förmigem Querschnitt, teilweise mit Elastomer 64 gefüllt ist.

Figur 29 zeigt eine Dichtung mit einem Dichtkörper 30"" aus einem expandierbaren Material wie beispielsweise expandierbarem Metall oder einem Kunststoff mit hohem Wärmeausdehnungskoeffizienten. Der Dichtkörper 30"" aus Figur 29 hat die Form eines Rohrabschnittes. Entsprechend ist der Zwischenraum zwischen proximalem und distalem Implantatsteil 10"" beziehungsweise 20"" gestaltet.

Die Figuren 30 bis 38 zeigen einen Dichtkörperträger 70, der als Werkzeug zum Montieren eines Dichtkörpers 30 am proximalen Teilschaft 10 dient. Der Dichtkörperträger 70 weist an einem Ende eine nach innen offene Nut 72 auf, in die ein Dichtkörper 30 einsetzt werden kann. Vorzugsweise wird der Dichtkörperträger 70 gleich nach der Herstellung des Dichtkörpers 30 vom Hersteller des Dichtkörpers mit dem Dichtkörper bestückt. Dies erleichtert die Handhabung durch den Arzt und verbessert die Hygiene. Ein außen geriffelter Greifbereich 74 erleichtert dabei die Handhabung.

## Patentansprüche

1. Zweiteiliges Zahnimplantat mit einem distalen (20) und einem proximalen (10) Implantatsteil, die in einem miteinander verbundenen Zustand an einer Verbindungsstelle aneinander angrenzen und im Bereich der Verbindungsstelle einander zugewandte Oberflächen (32, 34) aufweisen, wobei zwischen den einander zugewandten Oberflächen (32, 34) des distalen (20) und des proximalen (10) Implantatsteils ein Dichtkörper (30) vorgesehen ist, der den Oberflächen (32, 34) zugewandte Dichtflächen (36) besitzt, welche im endgültig verbundenen Zustand der beiden Implantatsteile (10, 20) an deren einander zugewandten Oberflächen (32, 34) dicht anliegen, wobei zwischen dem distalen (20) und dem proximalen (10) implantatsteil einander zugewandte Anschlagflächen (18, 28) vorgesehen sind, die sich bei fertig montiertem Zahnimplantat berühren und die das Maß der Annäherung der beiden einander zugewandten Oberflächen (32; 34) der Implantatsteile (10, 20), zwischen denen der Dichtkörper (30) angeordnet ist, beschränken, so dass die Anschlagflächen (18, 28) einen Mindestabstand der beiden einander zugewandten Oberflächen (32, 34) der Implantatsteile (10, 20) definieren, der durch den Dichtkörper (30) überbrückt wird, und wobei der Dichtkörper (30) wenigstens teilweise aus einem elastischen Material besteht, **dadurch gekennzeichnet, dass** die Außenfläche des Dichtkörpers (30) eine Außenfläche des Zahnimplantats bildet.

2. Zahnimplantat nach Anspruch 1, **dadurch gekennzeichnet, dass** die einander zugewandten Oberflächen (32, 34) quer zu einer Längsachse des Zahnimplantates und parallel zueinander verlaufen.

3. Zahnimplantat nach Anspruch 1, **dadurch gekennzeichnet, dass** die einander zugewandten Oberflächen (32, 34) konisch geformt sind, den gleichen Konuswinkel aufweisen und konzentrisch zueinander und zu einer Längsachse des Zahnimplantats angeordnet sind.

4. Zahnimplantat nach einem der Ansprüche 1 bis 3, **dadurch gekennzeichnet, dass** der Dichtkörper (30) die Form einer Kreisscheibe mit zentraler Durchtrittsöffnung hat.

5. Zahnimplantat nach einem der Ansprüche 1 bis 4, **dadurch gekennzeichnet, dass** der Dichtkörper (30) konkav geformte Stirnflächen (36) aufweist, so dass die in Implantatstängsrichtung gemessene Materialdicke des Dichtkörpers (30) zumindest Im entspannten Zustand im Bereich des Umfangsrandes des Dichtkörpers (30) größer ist, als in einem mittleren Bereich des Dichtkörpers (30).

6. Zahnimplantat nach einem der Ansprüche 1 bis 5, **dadurch gekennzeichnet, dass** das elastische Material des Dichtkörpers (30) um mindestens 5% einer Ausdehnungsrichtung elastisch komprimierbar ist.

7. Zahnimplantat nach einem der Ansprüche 1 bis 6, **dadurch gekennzeichnet, dass** das elastische Material des Dichtkörpers (30) ein Kunststoff ist

8. Zahnimplantat nach Anspruch 7, **dadurch gekennzeichnet, dass** der Kunststoff ein Elastomer, Thermoplast oder ein Duromergemisch ist

9. Zahnimplantat nach einem der Ansprüche 1 bis 8, **dadurch gekennzeichnet, dass** die Dichtung (30) neben Kunststoff Metall- oder Keramikbestandteile aufweist, die vorzugsweise integraler Bestandteil des Dichtkörpers (30) sind.

10. Zahnimplantat nach Anspruch 9, **dadurch gekennzeichnet, dass** wenigstens eine eine Außenfläche des Implantats bildende Außenfläche des Dichtkörpers mit einer Metall-, Keramik oder Kunstoffschicht (38) beschichtet ist, wobei die Metall-, Keramik- oder Kunststoffschicht (38) ein Eindringen von Bakterien In von der Metall-, Keramik- oder Kunststoffschicht (38) bedeckte Dichtungsbestandteile verhindert.

11. Zahnimplantat nach Anspruch 10, **dadurch gekennzeichnet, dass** die Metallschicht (38) Titan, Silber und/oder Gold oder die Kunststoffschicht PTFE enthält.

12. Zahnimplantat nach einem der Ansprüche 1 bis 9, **dadurch gekennzeichnet, dass** wenigstens die Dichtflächen des Dichtkörpers (30) aus einem elastischen, biokompatiblen, mundbeständigen, sterilisierbaren Kunststoff bestehen.

13. Zahnimplantat nach Anspruch 7 bis 12, **dadurch gekennzeichnet, dass** der Kunststoff einen Wärmeausdehnungskoeffizienten von mehr als 75 · 10⁻⁶/K bei 20°C besitzt.

14. Zahnimplantat nach Anspruch 1 oder 3, **dadurch gekennzeichnet, dass** der Dichtkörper in einem radialen Freiraum zwischen den Oberflächen des distalen und des proximalen Implantatsteils angeordnet ist, wobei die Ausdehnung des Dichtkörpers in radialer Richtung größer ist als der Freiraum zwischen distalem und proximalem Implantatsteil in deren vollständig miteinander verbundenen Zustand.

15. Zahnimplantat nach einem der vorhergehenden Ansprüche,
wobei ein proximales Ende (22) des distalen Teilschaftes (20) und das distale Ende (14) des Aufbauteilsschaftes (10) geometrisch zueinander passend gestaltet sind und im Implantierten Zustand des Schaftes aneinander angrenzen,
wobei der distale Teilschaft (20) eine zum proximalen Ende (22) des distalen Teilschaftes (20) hin offene Längsöffnung mit einer Innenwandung (24) aufweist, die eine Grundgeometrie mit kreisförmigem Querschnitt aufweist, wobei in die Innenwandung V-förmige, zum proximalen Ende (22) des distalen Teilschaftes (20) hin offenen Vertiefungen (26) eingelassen sind, und wobei der Aufbauteilschaft (10) an seinem distalen Ende (14) eine Außenwandung mit einer Grundgeometrie mit kreisförmigem Querschnitt aufweist, die in die Längsöffnung des distalen Teilschaftes passt.

16. Zahnimplantat nach Anspruch 15, **dadurch gekennzeichnet, dass** die Außenwandung des Aufbauteilschaftes (10) im Bereich ihres distalen Endes (14) V-förmige Vorsprünge (16) aufweist, die derart an die V-förmigen Vertiefungen (26) des distalen Teilschaftes (20) angepasst sind, dass bei miteinander verbundenem distalen Teilschaft (20) und Aufbauteilschaft (10) Flankenabschnitte (18, 28) der V-förmigen Vertiefungen (26) und der V-förmigen Vorsprünge (16) sich gegenseitig berührend zusammenwirken und die die Kompression der Dichtung (30) begrenzenden, einander zugewandten Anschlagflächen bilden.

17. Zahnimplantat nach Anspruch 15 oder 16, **dadurch gekennzeichnet, dass** der distale Teilschaft (20) vier der V-förmigen Vertiefungen (26) aufweist, die gleichmäßig über den Umfang der Innenwandung (24) verteilt sind und dass der Aufbauteilschaft (10) entsprechend vier der V-förmigen Vorsprünge (16) aufweist, die ebenfalls gleichmäßig über den Umfang der Außenwandung verteilt sind.

18. Zahnimplantat nach Anspruch 16, **dadurch gekennzeichnet, dass** die Grundgeometrie der Außenwandung des Aufbauteilschaftes (10) im Bereich der V-förmigen Vorsprünge (16) konisch ist.

19. Zahnimplantat nach Anspruch 18, **dadurch gekennzeichnet, dass** die Grundgeometrie der Innenwandung (24) der Längsöffnung des distalen Teilschaftes (20) im Bereich der V-förmigen Vertiefungen (26) konisch ist.

20. Zahnimplantat nach einem der Ansprüche 15 bis 19, **dadurch gekennzeichnet, dass** zwischen zwei bei fertig montiertem Schaft einander gegenüberliegenden und In Bezug auf die radiale Richtung des Schaftes außen liegenden Stirnflächen (32, 34) der Dichtkörper (30) angeordnet ist und als Dichtung wirkt, wobei der Dichtkörper (30) so bemessen ist, dass er in axialer Richtung des Schaftes komprimiert ist, wenn der distale Teilschaft (20) und der proximale Aufbauteilschaft (10) ihre endgültige, axiale Relativposition zueinander eingenommen haben.

21. Zahnimplantat nach Anspruch 20, **dadurch gekennzeichnet, dass** der Dichtkörper (30) die Form eines kreisförmigen Dichtringes mit rechteckigen Materialquerschnitt aufweist.

22. Zahnimplantat nach einem der Ansprüche 15 bis 21 **dadurch gekennzeichnet, dass** der distale Teilschaft und/oder der proximale Aufbauteilschaft aus biokompatiblem Metall gefertigt sind.

23. Zahnimplantat nach Anspruch 22, **dadurch gekennzeichnet, dass** das Metall Titan oder eine titanhaltige Legierung ist.

24. Zahnimplantat nach einem der Ansprüche 15 bis 21 **dadurch gekennzeichnet, dass** der distale Teilschaft und/oder der proximale Teilschaft aus Keramik gefertigt sind.

25. Zahnimplantat nach Anspruch 24, **dadurch gekennzeichnet, dass** die Keramik gehipt und/oder poliert ist.

26. Zahnimplantat nach Anspruch 24 oder 25, **dadurch gekennzeichnet, dass** die Keramik ZrO₂, ZrO₂/ZAl₂O₃/Y₂O₃ (ATZ), ZrO₂/Y₂O₃ (TZP) oder ZrO₂N₂O₃/Al₂O₃ (TZP-A) enthält

27. Zahnimplantat nach einem der Ansprüche 15 bis 21, **dadurch gekennzeichnet, dass** der distale Teilschaft und/oder der proximale Teilschaft aus Kunststoff gefertigt ist.

28. Zahnimplantat nach Anspruch 27, **dadurch gekennzeichnet, dass** der Kunststoff Polyetheretherketon (PEEK) enthält.

## Claims

1. A two-part tooth implant with a distal (20) and a proximal (10) implant part which, in a state connected to one another, are adjacent to each other at a connection site and in the area of the connection site have surfaces (32, 34) facing each other,
wherein between the surfaces (32, 34) facing each other of the distal (20) and of the proximal (10) implant part there is provided a sealing body (30) having sealing surfaces (36) facing the surfaces (32, 34), which in the finally connected state of the two implant parts (10, 20) closely fit on the surfaces (32, 34) thereof facing each other,
wherein between the distal (20) and the proximal (10) implant part there are provided abutment surfaces (18, 28) facing each other which, when the tooth implant is completely assembled, touch each other and which limit the degree of approximation of the two surfaces (32; 34) facing each other of the implant parts (10, 20), between which the sealing body (30) is arranged, so that the abutment surfaces (18, 28) define a minimum distance of the two surfaces (32, 34) facing each other of the implant parts (10, 20), which distance is bridged by the sealing body (30), and wherein the sealing body (30) consists at least partially of an elastic material, **characterized in that** the outer surface of the sealing body (30) forms an outer surface of the tooth implant.

2. The tooth implant according to claim 1, **characterized in that** the surfaces (32, 34) facing each other run transversely to a longitudinal axis of the tooth implant and parallel to each other.

3. The tooth implant according to claim 1, **characterized in that** the surfaces (32, 34) facing each other are formed conically, have the same cone angle, and are arranged concentrically to each other and to a longitudinal axis of the tooth implant.

4. The tooth implant according to any one of claims 1 to 3, **characterized in that** the sealing body (30) has the form of a circular disc with a central opening.

5. The tooth implant according to any one of claims 1 to 4, **characterized in that** the sealing body (30) has concavely formed end faces (36) so that the thickness of the material of the sealing body (30) measured in the longitudinal direction of the implant at least in the decompressed state in the area of the circumferential edge of the sealing body (30) is larger than in a central area of the sealing body (30).

6. The tooth implant according to any one of claims 1 to 5, **characterized in that** the elastic material of the sealing body (30) can be elastically compressed by at least 5% of a direction of expansion.

7. The tooth implant according to any one of claims 1 to 6, **characterized in that** the elastic material of the sealing body (30) is a plastic material.

8. The tooth implant according to claim 7, **characterized in that** the plastic material is an elastomer, a thermoplastic material or a duromer mixture.

9. The tooth implant according to any one of claims 1 to 8, **characterized in that** the sealing (30) besides plastic comprises metal or ceramic components, which preferably are an integral component of the sealing body (30).

10. The tooth implant according to claim 9, **characterized in that** at least one outer surface of the sealing body forming an outer surface of the implant is coated with a metal, ceramic or plastic layer (38), wherein the metal, ceramic or plastic layer (38) prevents that bacteria penetrate into sealing components covered by the metal, ceramic or plastic layer (38).

11. The tooth implant according to claim 10, **characterized in that** the metal layer (38) contains titanium, silver and/or gold or **in that** the plastic layer contains PTFE.

12. The tooth implant according to any one of claims 1 to 9, **characterized in that** at least the sealing surfaces of the sealing body (30) consist of an elastic, bio-compatible, mouth-resistant, sterilizable plastic material.

13. The tooth implant according to claim 7 to 12, **characterized in that** the plastic material has a coefficient of thermal expansion of more than 75*10⁻⁶/K at 20°C.

14. The tooth implant according to claim 1 or 3, **characterized in that** the sealing body is arranged in a radial free space between the surfaces of the distal and proximal implant parts, wherein the expansion of the sealing body in the radial direction is larger than the free space between the distal and proximal implant parts in the state in which they are completely connected to each other.

15. The tooth implant according to any one of the preceding claims,
wherein a proximal end (22) of the distal partial stem (20) and the distal end (14) of the build-up partial stem (10) are designed in such a manner that they geometrically fit each other and are adjacent to each other in the implanted state of the stem,
wherein the distal partial stem (20) comprises a longitudinal opening with an inner wall (24), which opening is open towards the proximal end (22) of the distal partial stem (20), which inner wall has a basic geometry with a circular cross-section,
wherein into the inner wall there are inserted V shaped recesses (26), which are open towards the proximal end (22) of the distal partial stem (20), and wherein the build-up partial stem (10) at its distal end (14) comprises an outer wall with a basic geometry with a circular cross-section, which fits into the longitudinal opening of the distal partial stem.

16. The tooth implant according to claim 15, **characterized in that** the outer wall of the build-up partial stem (10) in the area of its distal end (14) comprises V shaped projections (16), which are adapted to the V shaped recesses (26) of the distal partial stem (20) such that, when the distal partial stem (20) and the build-up partial stem (10) are connected to each other, flank sections (18, 28) of the V shaped recesses (26) and of the V shaped projections (16) touch each other such that they act in concert and form the abutment surfaces facing each other, which limit the compression of the the seal (30).

17. The tooth implant according to claim 15 or 16, **characterized in that** the distal partial stem (20) comprises four of the V shaped recesses (26), which are evenly distributed along the circumference of the inner wall (24), and that the build-up partial stem (10) accordingly comprises four of the V shaped projections (16), which are also evenly distributed along the circumference of the outer wall.

18. The tooth implant according to claim 16, **characterized in that** the basic geometry of the outer wall of the build-up partial stem (10) is conical in the area of the V shaped projections (16).

19. The tooth implant according to claim 18, **characterized in that** the basic geometry of the inner wall (24) of the longitudinal opening of the distal partial stem (20) is conical in the area of the V shaped recesses (26).

20. The tooth implant according to any one of claims 15 to 19, **characterized in that** the sealing body (30) is arranged between two end faces (32, 34), which, when the stem is fully assembled, are opposite each other and lie outside with respect to the the radial direction of the stem, and acts as a seal, wherein the sealing body (30) is dimensioned such that it is compressed in the axial direction of the stem, when the distal partial stem (20) and the proximal build-up partial stem (10) have assumed their final, axial relative position with respect to each other.

21. The tooth implant according to claim 20, **characterized in that** the sealing body (30) has the shape of a circular sealing ring with a rectangular material cross-section.

22. The tooth implant according to any one of claims 15 to 21, **characterized in that** the distal partial stem and/or the proximal build-up partial stem are made from a bio-compatible metal.

23. The tooth implant according to claim 22, **characterized in that** the metal is titanium or an alloy containing titanium.

24. The tooth implant according to any one of claims 15 to 21, **characterized in that** the distal partial stem and/or the proximal partial stem are made from a ceramic material.

25. The tooth implant according to claim 24, **characterized in that** the ceramic material is HIPed and/or polished.

26. The tooth implant according to claim 24 or 25, **characterized in that** the ceramic material contains ZrO₂, ZrO₂/ZAl₂O₃/Y₂O₃ (ATZ), ZrO₂/Y₂O₃ (TZP) or ZrO₂/Y₂O₃/Al₂O₃ (TZP-A).

27. The tooth implant according to any one of claims 15 to 21, **characterized in that** the distal partial stem and/or the proximal partial stem are made from a plastic material.

28. The tooth implant according to claim 27, **characterized in that** the plastic contains polyetheretherketone (PEEK).

## Revendications

1. Implant dentaire en deux parties, comprenant une partie d'implant distale (20) et une partie d'implant proximale (10) qui, dans une situation reliée l'une à l'autre, sont adjacentes l'une à l'autre au niveau d'un emplacement de liaison et présentent dans la région de l'emplacement de liaison des surfaces (32, 34) tournées l'une vers l'autre, de sorte que, entre les surfaces (32, 34) tournées l'une vers l'autre de la partie d'implant distale (20) et de la partie d'implant proximale (10), il est prévu un corps d'étanchement (30) qui possède des surfaces d'étanchement (36) tournées vers les surfaces (32, 34) et, dans la situation définitivement reliée des deux parties d'implant (10, 20), sont appliquées de manière étanche contre leurs surfaces (32, 34) tournées l'une vers l'autre, et de sorte que, entre la partie d'implant distale (20) et la partie d'implant proximale (10), il est prévu des surfaces de butée (18, 28) tournées l'une vers l'autre qui, dans l'implant dentaire définitivement monté, se touchent et limitent la distance de rapprochement des deux surfaces (32 ; 34) tournées l'une vers l'autre des parties d'implant (10, 20), entre lesquelles est agencé le corps d'étanchement (30), de sorte que les surfaces de butée (18, 28) définissent une distance minimum des deux surfaces (32, 34) tournées l'une vers l'autre des parties d'implant (10, 20), distance qui est comblée par le corps d'étanchement (30), et ledit corps d'étanchement (30) est constitué au moins partiellement en un matériau élastique,
**caractérisé en ce que** la surface extérieure du corps d'étanchement (30) forme une surface extérieure de l'implant dentaire.

2. Implant dentaire selon la revendication 1, **caractérisé en ce que** les surfaces (32, 34) tournées l'une vers l'autre s'étendent perpendiculairement à un axe longitudinal de l'implant dentaire et parallèlement l'une à l'autre.

3. Implant dentaire selon la revendication 1, **caractérisé en ce que** les surfaces (32, 34) tournées l'une vers l'autre sont de forme conique, présentent le même angle conique, et sont agencées concentriquement l'une à l'autre et à un axe longitudinal de l'implant dentaire.

4. Implant dentaire selon l'une des revendications 1 à 3, **caractérisé en ce que** le corps d'étanchement (30) a la forme d'un disque circulaire avec une ouverture traversante centrale.

5. Implant dentaire selon l'une des revendications 1 à 4, **caractérisé en ce que** le corps d'étanchement (30) présente des surfaces frontales (36) de forme concave, de sorte que l'épaisseur, mesurée en direction longitudinale de l'implant, du matériau du corps d'étanchement (30) est, au moins dans la situation détendue, plus grande dans la région de la bordure périphérique du corps d'étanchement (30) que dans une région médiane du corps d'étanchement (30).

6. Implant dentaire selon l'une des revendications 1 à 5, **caractérisé en ce que** le matériau élastique du corps d'étanchement (30) est susceptible d'être comprimé élastiquement d'au moins 5 % dans une direction d'extension.

7. Implant dentaire selon l'une des revendications 1 à 6, **caractérisé en ce que** le matériau élastique du corps d'étanchement (30) est une matière plastique.

8. Implant dentaire selon la revendication 7, **caractérisé en ce que** la matière plastique est un élastomère, une matière thermoplastique, ou encore un mélange de matières thermodurcissables.

9. Implant dentaire selon l'une des revendications 1 à 8, **caractérisé en ce que** le corps d'étanchement (30) contient, outre la matière plastique, des composantes en métal ou en céramique qui sont de préférence des parties constitutives intégrales du corps d'étanchement (30).

10. Implant dentaire selon la revendication 9, **caractérisé en ce qu'**au moins une surface extérieure du corps d'étanchement, qui constitue une surface extérieure de l'implant, est revêtue d'une couche de métal, de céramique ou de matière plastique (38), ladite couche de métal, de céramique ou de matière plastique (38) empêchant une pénétration de bactéries dans les parties constitutives de l'étanchement qui sont recouvertes par la couche de métal, de céramique ou de matière plastique (38).

11. Implant dentaire selon la revendication 10, **caractérisé en ce que** la couche en métal (38) contient du titane, de l'argent et/ou de l'or, ou bien la couche en matière plastique contient du PTFE.

12. Implant dentaire selon l'une des revendications 1 à 9, **caractérisé en ce que** les surfaces d'étanchéité au moins du corps d'étanchement (30) sont d'une matière plastique élastique, biocompatible, compatible avec le site buccal et stérilisable.

13. Implant dentaire selon les revendications 7 à 12, **caractérisé en ce que** la matière plastique possède un coefficient de dilatation thermique supérieur à 75·10⁻⁶/K à 20° C.

14. Implant dentaire selon la revendication 1 ou 3, **caractérisé en ce que** le corps d'étanchement est agencé dans un espace libre radial entre les surfaces de la partie d'implant distale et de la partie d'implant proximale, l'extension du corps d'étanchement en direction radiale étant supérieure à l'espace libre entre la partie d'implant distale et la partie d'implant proximale dans leur situation entièrement reliée l'une à l'autre.

15. Implant dentaire selon l'une des revendications précédentes,
dans lequel une extrémité proximale (22) de la partie de tige distale (20) et l'extrémité distale (14) de la partie de tige rapportée (10) sont conçues de manière ajustée l'une à l'autre sur le plan géométrique et sont mutuellement limitrophes dans la situation implantée de la tige,
dans lequel la partie de tige distale (20) comprend une ouverture longitudinale, ouverte vers l'extrémité proximale (22) de la partie de tige distale (20), avec une paroi intérieure (24) qui présente une géométrie de base avec une section de forme circulaire, de sorte que des renfoncements en forme de V (26), ouverts en direction de l'extrémité proximale (22) de la partie de tige distale (20), sont ménagés dans la paroi intérieure, et de sorte que la partie de tige rapportée (10) comporte à son extrémité distale (14) une paroi extérieure avec une géométrie de base à section de forme circulaire, qui s'ajuste dans l'ouverture longitudinale de la partie de tige distale (20).

16. Implant dentaire selon la revendication 15, **caractérisé en ce que** la paroi extérieure de la partie de tige rapportée (10) comporte, dans la région de son extrémité distale (14), des saillies en forme de V (16), qui sont ajustées aux renfoncements (26) en forme de V de la partie de tige distale (20) de telle façon que lorsque la partie de tige distale (20) et la partie de tige rapportée (10) sont reliées l'une à l'autre, des tronçons de flanc (18, 28) des renfoncements en forme de V (26) et des saillies (16) en forme de V coopèrent en se touchant mutuellement et forment les surfaces de butée tournées l'une vers l'autre qui limitent la compression de l'étanchéité (30).

17. Implant dentaire selon la revendication 15 ou 16, **caractérisé en ce que** la partie de tige distale (20) comprend quatre renfoncements en forme de V (26), qui sont répartis régulièrement sur la périphérie de la paroi intérieure (24), et **en ce que** la partie de tige rapportée (10) comporte de façon correspondante quatre saillies en forme de V (16), qui sont également réparties régulièrement sur la périphérie de la paroi extérieure.

18. Implant dentaire selon la revendication 16, **caractérisé en ce que** la géométrie de base de la paroi extérieure de la partie de tige rapportée (10) est conique dans la région des saillies en forme de V (16).

19. Implant dentaire selon la revendication 18, **caractérisé en ce que** la géométrie de base de la paroi intérieure (24) de l'ouverture longitudinale de la partie de tige distale (20) est conique dans la région des renfoncements en forme de V (26).

20. Implant dentaire selon l'une des revendications 15 à 19, **caractérisé en ce que** le corps d'étanchement (30) est agencé entre deux surfaces frontales (32, 34) mutuellement opposées lorsque la tige est finalement montée et situées à l'extérieur par référence à la direction radiale de la tige, et fait office de joint, ledit corps d'étanchement (30) ayant des dimensions telles qu'il est comprimé en direction axiale de la tige lorsque la partie de tige distale (20) et la partie de tige rapportée proximale (10) occupent leur position axiale relative définitive l'une par rapport à l'autre.

21. Implant dentaire selon la revendication 20, **caractérisé en ce que** le corps d'étanchement (30) présente la forme d'une bague d'étanchement de forme circulaire avec une section de matériau rectangulaire.

22. Implant dentaire selon l'une des revendications 15 à 21, **caractérisé en ce que** la partie de tige distale et/ou la partie de tige rapportée proximale sont fabriquées en un métal biocompatible.

23. Implant dentaire selon la revendication 22, **caractérisé en ce que** le métal est du titane ou un alliage contenant du titane.

24. Implant dentaire selon l'une des revendications 15 à 21, **caractérisé en ce que** la partie de tige distale et/ou la partie de tige proximale sont fabriquées en céramique.

25. Implant dentaire selon la revendication 24, **caractérisé en ce que** la céramique est post-compactée (Hot Isostatic Postcompaction) et/ou polie.

26. Implant dentaire selon la revendication 24 ou 25, **caractérisé en ce que** la céramique contient du ZrO₂, ZrO₂/Al₂O₃/Y₂O₃ (ATZ), ZrO₂/Y₂O₃ (TZP) ou ZrO₂/Y₂O₃/Al₂O₃ (TZP-A).

27. Implant dentaire selon l'une des revendications 15 à 21, **caractérisé en ce que** la partie de tige distale et/ou la partie de tige proximale sont fabriquées en matière plastique.

28. Implant dentaire selon la revendication 27, **caractérisé en ce que** le la matière plastique contient de la polyétheréthercétone (PEEK).
